# FASCICULE DE BREVET EUROPEEN

(11) **EP 3 328 713 B1**
(45) Date de publication et mention de la délivrance du brevet: **21.08.2019**
(21) Numéro de dépôt: 16756733.8
(22) Date de dépôt: 29.07.2016
(51) Int. Cl.: B62D 5/04

(54) **DISPOSITIF DE DIRECTION ASSISTÉE AVEC COQUE DE PROTECTION ÉTANCHE**
SERVOLENKVORRICHTUNG MIT ABGEDICHTETEM SCHUTZGEHÄUSE
POWER-STEERING DEVICE WITH SEALED PROTECTIVE CASING

(30) Priorité: 31.07.2015 FR 1557390
(43) Date de publication de la demande: 06.06.2018
(73) Titulaire: Jtekt Europe, 69540 Irigny (FR)
(72) Inventeur: REY, Laurent, 69100 Villeurbanne (FR)
(74) Mandataire: Chevalier, Renaud Philippe
(86) Numéro de dépôt international: PCT/FR2016/051983
(87) Numéro de publication internationale: WO 2017/021637

(56) Documents cités:
- DE-A1-102006 057 665
- DE-A1-102012 222 264
- US-A1- 2012 329 592

## Description

La présente invention se rapporte aux dispositifs de direction assistée pour véhicules, et plus particulièrement aux dispositifs de direction à assistance électrique.

Les dispositifs de direction assistée actuels comprennent généralement un assemblage de nombreux modules, qui correspondent aux différentes fonctions qui se sont ajoutées au fil du temps pour perfectionner les dispositifs de direction.

Ainsi, on trouve généralement, au sein d'un dispositif de direction assistée, un mécanisme de base, assurant une fonction de commande manuelle de direction, ledit mécanisme de base comprenant une colonne de direction qui est entraînée par un volant de conduite et qui engrène au moyen d'un pignon d'entraînement sur une crémaillère de direction, ladite crémaillère étant guidée en translation dans un carter de direction et reliée aux roues directrices par des biellettes de direction.

On trouve également un moteur d'assistance, généralement associé à un réducteur à engrenage qui permet audit moteur d'assistance d'agir sur la crémaillère ou sur la colonne de direction, l'ensemble assurant ainsi une fonction de commande motorisée de direction. Le réducteur à engrenage est alors généralement logé dans un carter de réducteur, rapporté et fixé sur le carter de direction, tandis que le moteur d'assistance est contenu dans un carter de moteur qui est lui-même rapporté et fixé sur le carter de réducteur.

On retrouve en outre généralement un capteur de couple, dont la fonction est de mesurer le couple exercé par le conducteur sur le volant de conduite, ledit capteur de couple étant logé dans un carter de capteur qui peut être par exemple fixé sur le carter de réducteur, de manière à être traversé par la colonne de direction.

Ainsi, à chaque ajout d'une nouvelle fonction venant perfectionner le dispositif de direction, il a été nécessaire de greffer sur l'assemblage qui existait précédemment, et plus globalement sur le carter de direction, un carter additionnel spécifique, contenant les organes (moteur d'assistance, engrenages du réducteur, barre de torsion et circuit magnétique du capteur de couple, etc.) nécessaires à l'accomplissement de la nouvelle fonction.

Bien entendu, pour garantir la protection desdits organes, et en particulier le maintien de la lubrification des organes mécaniques mobiles du dispositif de direction, il est nécessaire de prévoir des joints d'étanchéité à chaque interface de jonction entre deux carters.

Or, la multiplication des pièces constitutives du dispositif de direction assistée rend les opérations d'assemblage dudit dispositif de plus en plus longues, complexes, et onéreuses.

En outre, en multipliant les connexions entre carters distincts, et donc en multipliant le nombre de joints d'étanchéité correspondants, on augmente la probabilité qu'une erreur de montage soit commise, et notamment qu'un joint soit endommagé lors de l'assemblage du dispositif, ce qui accroît donc les risques d'apparition de défauts sur la ligne de production.

De même, en raison de la multiplicité des connexions entre carters, on augmente également les risques de défaillance ultérieure du dispositif, et notamment d'apparition de fuite au niveau de l'une desdites connexions, une fois ledit dispositif mis en service.

Par ailleurs, les assemblages de carters connus restent relativement vulnérables à la corrosion car l'eau et le brouillard salin (c'est-à-dire le nuage de gouttelettes d'eau salée en suspension dans l'air qui se forme par exemple lorsque le véhicule circule sur une route enneigée salée, ou bien encore sur une route située à proximité de la mer) tendent à s'infiltrer dans le dispositif de direction au niveau des interfaces entre les carters.

En outre, les vis de fixation qui retiennent un carter sur un autre carter sont généralement réalisées dans un matériau métallique qui est distinct du matériau métallique constitutif du carter (typiquement, on utilise des vis en acier pour assembler des carters en aluminium), si bien que l'on peut parfois observer, en présence d'eau et *a fortiori* en présence d'eau salée (brouillard salin), un effet de corrosion galvanique au niveau des fixations des carters, ce qui peut conduire à terme à une fragilisation voire à une rupture de l'assemblage, et/ou à une défaillance du dispositif de direction. Il peut encore être fait référence au document DE 10 2012 222264 A1, qui divulgue les caractéristiques du préambule de la revendication 1.

Les objets assignés à l'invention visent par conséquent à remédier aux inconvénients susmentionnés et à proposer un nouveau dispositif de direction assistée qui présente une structure améliorée qui protège efficacement et durablement les organes de la direction, qui soit particulièrement résistante aux agressions extérieures chimiques et mécaniques, tout en étant simple et peu onéreuse à fabriquer.

Les objets assignés à l'invention sont atteints au moyen d'un dispositif de direction assistée destiné à être installé sur une structure réceptrice appartenant à un véhicule, telle qu'un berceau portant un train roulant dudit véhicule, ledit dispositif comprenant une crémaillère de direction, ainsi qu'au moins un sous-ensemble, dit « sous-ensemble actionneur », qui est destiné à manoeuvrer ladite crémaillère et qui comprend à cet effet au moins un moteur d'assistance, un organe d'entraînement, du genre pignon d'entraînement, agencé pour être entraîné par le moteur d'assistance et pour venir en prise sur la crémaillère afin de pouvoir entraîner cette dernière en déplacement, ainsi qu'une structure porteuse qui porte le moteur d'assistance et qui est agencée pour soutenir et guider l'organe d'entraînement et la crémaillère l'un par rapport à l'autre, ledit dispositif de direction assistée étant caractérisé en ce qu'il comprend également une coque de confinement, qui est distincte du sous-ensemble actionneur, et qui est formée par la réunion d'au moins une première portion de coque, dite « embase », et d'une seconde portion de coque, dite « cloche », qui sont rapportées l'une sur l'autre et fixées l'une à l'autre par une jonction étanche de manière à entourer le sous-ensemble actionneur d'une enveloppe protectrice qui isole ledit sous-ensemble actionneur de l'environnement extérieur du dispositif de direction, de telle sorte que ladite coque de confinement empêche ledit sous-ensemble actionneur d'être exposé aux projections d'eau, et au brouillard salin, lorsque le dispositif de direction assistée est en place sur la structure réceptrice du véhicule.

On notera que la coque de confinement permet avantageusement de protéger le sous-ensemble actionneur, et plus globalement tout organe placé à l'intérieur de ladite coque, non seulement de l'intrusion de liquides (eau, gouttelettes de brouillard salin, mais aussi tout liquide étranger au dispositif de direction et susceptible d'être présent dans l'environnement de la coque, et en particulier dans le compartiment moteur, tel que liquide de frein, liquide lave-vitre, huile moteur, ou carburant), mais également des projections de particules solides.

En particulier la coque offrira une protection contre la poussière (soulevée notamment par le roulage sur route sèche) et contre les projections de granulat, notamment des projections de grains de sable ou de grains de sels (utilisés pour déneiger ou déverglacer les routes).

Avantageusement, l'invention permet de séparer :
- d'un côté les fonctions dites « d'actionnement », lesdites fonctions d'actionnement comprenant tout d'abord la fonction d'exécution de la manoeuvre mécanique de la direction à proprement parler, réalisée notamment par les organes mécaniques que sont le moteur d'assistance, le pignon d'entraînement et la crémaillère, lesdites fonctions d'actionnement comprenant également la fonction de maintien et de guidage desdits organes mécaniques de manoeuvre, qui est accomplie par la structure porteuse, et lesdites fonctions d'actionnement comprenant enfin, le cas échéant, la fonction de contrôle et d'asservissement de l'assistance de direction, qui peut être réalisée notamment par un ou plusieurs capteurs associés à un calculateur,
- et d'un autre côté la fonction d'étanchéité, et plus particulièrement la fonction de protection contre l'humidité, les projections d'eau et le brouillard salin, fonction d'étanchéité qui est remplie de manière globale, et même exclusive, par la coque de confinement protectrice, du fait que ladite coque de confinement vient recouvrir le sous-ensemble actionneur dans son entier, de telle manière que ledit sous-ensemble actionneur se retrouve placé à l'intérieur d'une enceinte de protection étanche, qui empêche les surfaces extérieures dudit sous-ensemble d'être directement exposées à l'atmosphère qui environne le dispositif de direction, dans la mesure où les parois de la coque de confinement, qui délimitent ladite enceinte, font barrière, en sur-épaisseur, tout autour dudit sous-ensemble actionneur.

On notera qu'il devient ainsi possible d'optimiser séparément, selon les impératifs liés à leurs fonctions propres, le sous-ensemble actionneur d'une part, et la coque de confinement d'autre part, en dissociant la conception et la fabrication de ces deux éléments distincts.

En particulier, du fait que le sous-ensemble actionneur est désormais abrité à l'intérieur de la coque de confinement, il n'est plus nécessaire que ledit sous-ensemble actionneur présente intrinsèquement un degré d'étanchéité élevé et/ou une résistance particulière à la corrosion.

Par conséquent, il est possible, sans risque pour la longévité et la fiabilité du dispositif de direction, de simplifier l'agencement du sous-ensemble actionneur, de réduire le nombre de pièces constitutives de celui-ci, notamment en supprimant des joints, et ainsi de le rendre plus léger et plus compact, moins onéreux, et plus simple à assembler.

Il est également possible d'élargir le choix des matériaux utilisables pour la confection de la structure porteuse dudit sous-ensemble actionneur, de sorte par exemple à privilégier des matériaux plus légers ou plus robustes.

De même, le recours à une coque de confinement externe, additionnelle, c'est-à-dire distincte du sous-ensemble actionneur, permet de réaliser une étanchéité de grande qualité à moindre frais, en une seule opération au cours de laquelle on ferme et l'on scelle ladite coque, en rapportant la cloche sur l'embase et en créant la jonction étanche entre ladite cloche et ladite embase.

Ceci est notamment rendu possible par le fait que l'étanchéité est majoritairement réalisée par des parois pleines formées d'un seul tenant, qui correspondent respectivement aux parois constitutives de l'embase et de la cloche, et qui, intrinsèquement, ne sont donc pas sujettes aux infiltrations, contrairement aux jonctions de l'art antérieur qui utilisaient des vis et des joints rapportés pour assembler les carters les uns aux autres.

De même, grâce à l'invention, le nombre de jonctions statiques (c'est-à-dire de jonctions entre deux pièces fixes de structure) à étanchéifier se trouve considérablement réduit, puisqu'il suffit en pratique de veiller à la réalisation d'une (seule) jonction étanche, de préférence continue, entre l'embase et la cloche, au lieu de devoir multiplier les jonctions étanches entre différents carters.

A ce titre, on remarquera qu'il est avantageusement possible de prévoir, au sein de la cloche et de l'embase, des aménagements spécifiques, destinés à améliorer la résistance mécanique et la qualité de l'étanchéité de ladite jonction étanche, et ce sans que ces aménagements, propres à la coque de confinement, n'aient la moindre incidence sur l'agencement de la structure porteuse ou sur les opération de fabrication (et notamment sur les opérations d'usinage) de ladite structure porteuse, et plus globalement du sous-ensemble actionneur.

On peut ainsi optimiser l'étanchéité de la coque de confinement sans pour autant compliquer la conception ou la fabrication dudit sous-ensemble actionneur.

En outre, l'utilisation d'une telle (sur)coque de confinement permet de dissocier le choix du ou des matériaux utilisés pour former la coque, et plus particulièrement la cloche d'une part et l'embase d'autre part, du choix du ou des matériaux utilisés pour construire le sous-ensemble actionneur, et en particulier la structure porteuse dudit sous-ensemble actionneur, et donc d'utiliser des matériaux différents pour former la coque d'une part, et la structure porteuse (ossature) d'autre part.

Ainsi, on pourra notamment envisager de réaliser tout ou partie de la coque de confinement en matière plastique, relativement fine, avantageusement étanche, légère, et insensible à la corrosion, tandis que l'on pourra privilégier un matériau métallique, plus rigide et plus robuste, tel que l'acier ou l'aluminium, pour la structure porteuse du sous-ensemble actionneur.

Par ailleurs, le fait de subdiviser la coque de confinement en au moins, voire exactement, deux portions de coque, à savoir une embase et une cloche qui vient coiffer ladite embase, on simplifie non seulement la fabrication de ladite coque, notamment par moulage, mais également les opérations d'assemblage du dispositif de direction assistée dans son ensemble.

En effet, on pourra avantageusement commencer par disposer l'embase nue sur une table d'assemblage du genre gabarit ou « marbre », de telle sorte que l'embase soit ouverte et accessible par le dessus pour recevoir le sous-ensemble actionneur.

Ledit sous-ensemble actionneur pourra quant à lui avantageusement être pré-assemblé et pré-réglé séparément, sur un autre poste de la ligne de fabrication, avant d'être rapporté, positionné et fixé dans ladite embase.

On disposera donc d'une bonne accessibilité pour mettre en place le sous-ensemble actionneur au sein de l'embase, et procéder, le cas échéant, à certains réglages nécessaires dudit sous-ensemble actionneur (positionnement des pièces, réglages des jeux, ajustement de la course de la crémaillère, etc.), notamment par rapport à l'embase, alors que la coque est encore ouverte.

La coque sera ensuite refermée en rapportant et en fixant la cloche sur l'embase, par-dessus le sous-ensemble actionneur, puis en formant la jonction étanche entre ladite cloche et ladite embase, par exemple par collage.

Le procédé d'assemblage du dispositif de direction se verra ainsi grandement simplifié et standardisé.

Cette simplification et cette standardisation permettront notamment de réduire considérablement le risque de défaillance inhérent audit procédé d'assemblage, du fait que d'une part les pièces à assembler (cloche, embase et sous-ensemble actionneur) auront pu être contrôlées chacune séparément avant leur assemblage, en amont de la chaîne de fabrication, et que d'autre part les opérations d'assemblage à effectuer sont peu nombreuses et relativement peu complexes.

Enfin, la séparation du dispositif de direction en un sous-ensemble actionneur interne d'une part et une coque externe de confinement d'autre part permet d'envisager la réalisation de différentes gammes de dispositifs de direction, par exemple destinées à différents modèles de véhicules, qui conserveraient un même sous-ensemble actionneur, commun aux différents modèles de véhicules, mais qui utiliseraient des coques de confinement différentes, adaptées à la configuration et aux dimensions des différents modèles de véhicules concernés, et plus particulièrement adaptées aux structures réceptrices propres à chacun desdits modèles de véhicules.

Ici encore, en permettant d'utiliser un même sous-ensemble actionneur pour de multiples modèles de véhicule, l'invention permet de standardiser globalement la fabrication des dispositifs de direction.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue en perspective, un exemple de mécanisme de direction assistée à crémaillère pour un dispositif de direction assistée selon l'invention.
La figure 2 illustre, selon une vue en perspective, un assemblage de carters formant une structure porteuse selon l'invention.
La figure 3 illustre, selon une vue en perspective, un exemple de palier de guidage satellite, destiné à compléter le guidage en translation de la crémaillère à distance de la structure porteuse.
La figure 4 illustre, selon une vue en perspective, une portion de dispositif de direction assistée selon l'invention qui correspond à la configuration d'assemblage et de guidage du mécanisme représenté sur la figure 1, au sein de la structure porteuse de la figure 2 et du palier satellite de la figure 3.
La figure 5 illustre, selon une vue en perspective, une première variante de réalisation d'un dispositif de direction assistée selon l'invention, qui correspond à la mise en place de la portion de dispositif de la figure 4, et plus particulièrement de la structure porteuse et du palier satellite, dans une portion de coque, ici inférieure, formant une embase.
La figure 6 illustre, selon une vue d'ensemble en perspective, la première variante de réalisation de dispositif de direction assistée selon l'invention, correspondant au dispositif représenté sur la figure 5 au sein duquel on a ajouté et refermé sur l'embase une cloche qui recouvre la structure porteuse, de manière à créer et sceller la coque de confinement.
La figure 7 illustre, selon une vue en perspective éclatée, l'assemblage de la structure porteuse des figures 2 et 4, sous forme d'un empilement de carters.
La figure 8 illustre, selon une vue en perspective, l'empilement de carters formant la structure porteuse des figures 2 et 7, en configuration assemblée.
La figure 9 représente, selon une vue de dessous, la structure porteuse de la figure 8 avec ses organes de fixation, ici des trous filetés, permettant la fixation de ladite structure porteuse à la structure réceptrice du véhicule.
La figure 10 illustre, selon une vue en perspective, la cloche utilisée pour couvrir la structure porteuse au sein du dispositif des figures 5 et 6, et plus particulièrement la face interne de ladite cloche.
La figure 11 illustre, selon une vue en perspective, l'embase utilisée pour recevoir et couvrir la structure porteuse au sein du dispositif des figures 5 et 6, et plus particulièrement la face interne de ladite embase.
La figure 12 illustre une vue en coupe du dispositif de direction de la figure 6, dans un plan de coupe qui est sécant à la crémaillère et qui contient l'axe directeur (XX') de l'arbre d'entrée du dispositif, ledit arbre d'entrée étant raccordé à la colonne de direction.
La figure 13 illustre, selon une vue de dessus, le dispositif **de direction** des figures 6 et 12.
La figure 14 illustre, selon une vue de face, le dispositif **de direction** de la figure 13.
La figure 15 illustre, selon une vue des dessous, le dispositif **de direction** des figures 13 et 14.
La figure 16 illustre, selon une vue en coupe perpendiculaire à l'axe longitudinal (YY') de la crémaillère, le dispositif des figures 6 et 13 à 15, et plus particulièrement un exemple d'agencement de la jonction étanche par laquelle la cloche est fixée à l'embase.
La figure 17 illustre, selon une vue en coupe perpendiculaire à l'axe longitudinal (YY') de la crémaillère, la fixation d'un dispositif des figures 6 et 13 à 15 sur une structure réceptrice du véhicule, de type berceau.
La figure 18 illustre, selon une vue en coupe longitudinale dans un plan contenant l'axe longitudinal (YY') de la crémaillère, le dispositif des figures 12 à 17.
La figure 19 illustre, selon une vue en perspective, une embase pour une seconde variante de réalisation de dispositif de direction assistée selon l'invention, dans lequel le palier de guidage satellite est situé dans une extension tubulaire formée d'un seul tenant avec ladite embase.
La figure 20 illustre, selon une vue en perspective, une seconde variante de réalisation de dispositif de direction selon l'invention mettant en oeuvre l'embase de la figure 19 ainsi qu'une cloche dont l'étendue, notamment l'étendue selon la direction longitudinale de la crémaillère, est réduite par rapport à l'étendue de la cloche de la première variante de réalisation de dispositif de direction de la figure 6.
La figure 21 illustre, selon une vue en perspective, une embase pour une troisième variante de réalisation de dispositif de direction assistée selon l'invention, dans lequel le palier de guidage satellite est noyé dans une extension tubulaire de ladite embase, et le calculateur de direction adossé au moteur d'assistance.
La figure 22 illustre, selon une vue en perspective, une troisième variante de réalisation de dispositif de direction selon l'invention mettant en oeuvre l'embase de la figure 21 ainsi qu'une cloche qui comporte un emplacement spécifique pour le calculateur adossé au moteur, et dont l'étendue selon la direction longitudinale de la crémaillère est réduite par rapport à l'étendue de la cloche de la première variante de réalisation de dispositif de direction de la figure 6 et par rapport à l'étendue de la cloche de la seconde variante de réalisation de dispositif de direction de la figure 20.
La figure 23 illustre, selon une vue partielle en perspective avec arrachement de matière, une quatrième variante de réalisation de dispositif de direction selon l'invention, au sein de laquelle le palier de guidage satellite est situé dans une extension tubulaire rapportée sur l'embase, et au sein de laquelle le calculateur de direction est adossé au moteur d'assistance comme c'était aussi le cas sur la troisième variante de réalisation de dispositif de direction de la figure 22.
Les figures 24, 25 et 26 illustrent respectivement, selon des vues en perspective, la cloche, l'embase, et la coque de confinement complète qui sont utilisées au sein de la quatrième variante de réalisation de dispositif de direction de la figure 23.
La figure 27 illustre, selon une vue schématique, une variante de mise en oeuvre de l'invention au sein d'un dispositif de direction assistée à double pignon.

La présente invention concerne un dispositif 1 de direction assistée.

Ledit dispositif 1 est destiné à être installé sur une structure réceptrice 2 appartenant à un véhicule V, de préférence un véhicule automobile.

Ladite structure réceptrice 2 pourra par exemple être un berceau, qui est fixé au châssis du véhicule V et qui porte un train roulant dudit véhicule, de préférence le train roulant avant du véhicule.

Par commodité de description, la structure réceptrice 2, sur laquelle repose et est fixé le dispositif 1 de direction assistée, pourra donc être assimilée à un berceau dans ce qui suit.

Le berceau 2 sera de préférence disposé sous le moteur qui sert à propulser le véhicule, transversalement à des longerons du châssis qui soutiennent ledit berceau.

Le train roulant avant portera avantageusement les roues directrices (ici une roue droite et une roue gauche) du véhicule, roues directrices dont l'orientation en lacet (angle de braquage) est contrôlée par le dispositif de direction 1.

De préférence, lesdites roues directrices seront également des roues motrices, servant à la propulsion (ici à la traction avant) du véhicule.

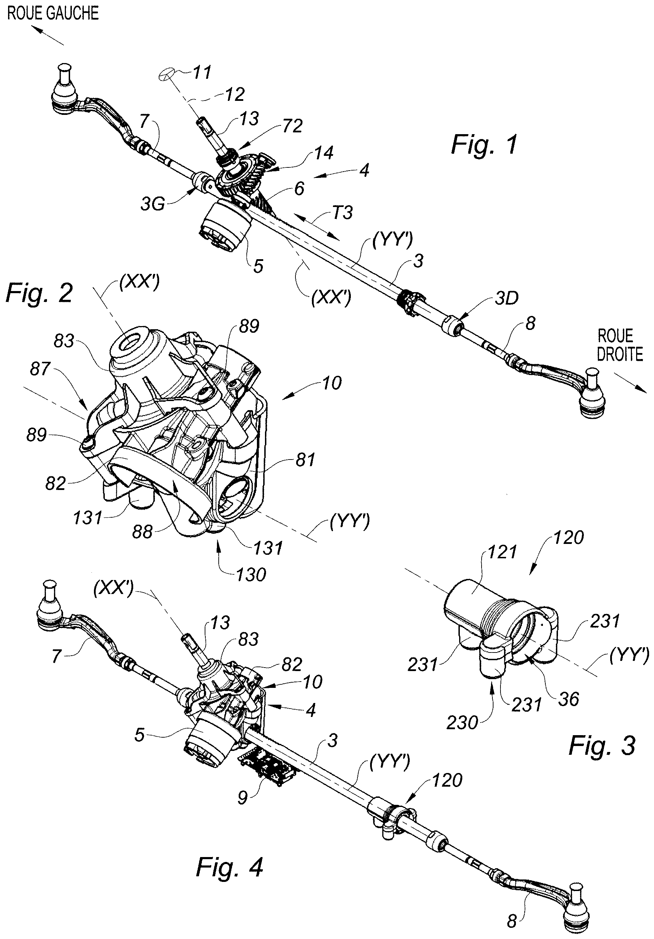

Selon l'invention, et tel que cela est notamment illustré sur les figures 1, 4, 5, 12 à 14 et 18, le dispositif de direction 1 comprend une crémaillère de direction 3 (ci-après « crémaillère »), ainsi qu'au moins un sous-ensemble, dit « sous-ensemble actionneur » 4, qui est destiné à manoeuvrer ladite crémaillère 3.

Ledit sous-ensemble actionneur 4 comprend à cet effet, tel que cela est notamment visible sur la figure 1, au moins un moteur d'assistance 5, ainsi qu'un organe d'entraînement 6, du genre pignon d'entraînement 6, agencé pour être entraîné par le moteur d'assistance 5 et pour venir en prise sur la crémaillère 3 afin de pouvoir entraîner ladite crémaillère 3 en déplacement.

On notera que, de façon particulièrement préférentielle, la crémaillère 3 est guidée en translation T3 (rectiligne), de sorte à pouvoir coulisser, selon une direction de translation (YY'), au sein du dispositif de direction 1, et plus globalement par rapport à la structure réceptrice 2 du véhicule, qui est considérée comme fixe (dans le référentiel du véhicule V).

Ladite direction de translation (YY') correspond avantageusement à l'axe longitudinal (YY') de ladite crémaillère, et sera donc assimilée audit axe longitudinal dans ce qui suit, par commodité de description.

En outre, ladite direction de translation (YY') correspondra également de préférence à la direction latérale transverse (gauche-droite) du véhicule.

Par ailleurs, de façon connue en soi, la crémaillère 3 est avantageusement raccordée, respectivement à son extrémité gauche 3G et à son extrémité droite 3D, à des biellettes de direction 7, 8, respectivement une biellette gauche 7 et une biellette droite 8, qui permettent chacune de transmettre le déplacement de la crémaillère 3 à un porte-fusée qui est orientable en lacet (par rapport au véhicule) et qui porte la roue directrice (roue gauche, roue droite) correspondante.

Le dispositif de direction 1 sera par ailleurs géré par un calculateur 9, qui élaborera, en fonction de lois d'assistance prédéterminées, avantageusement stockées dans une mémoire non volatile dudit calculateur 9, une consigne d'assistance que ledit calculateur 9 appliquera au moteur d'assistance 5.

Selon l'invention, le sous-ensemble actionneur 4 comprend également, tel que cela est notamment visible sur la figure 4, une structure porteuse 10 qui porte le moteur d'assistance 5 et qui est agencée pour soutenir et guider l'organe d'entraînement 6 et la crémaillère 3 l'un par rapport à l'autre.

Par ailleurs, le dispositif 1 de direction comprend de préférence également, tel que cela est schématisé sur les figures 1, 6, 12 et 18, un volant de conduite 11 qui permet au conducteur de manoeuvrer la direction et qui est porté par une colonne de direction 12.

De préférence, la colonne de direction 12 permettra un actionnement manuel direct de la crémaillère 3, et viendra en prise directe sur la crémaillère 3 au moyen d'un pignon d'entraînement 6 fixé sur ladite colonne de direction 12.

A cet effet, le sous-ensemble actionneur 4 comprendra de préférence un arbre d'entrée 13 qui est destiné à être accouplé à la colonne de direction 12 (et qui constitue donc un prolongement de ladite colonne de direction 12 à travers la structure porteuse 10).

On notera (XX') l'axe directeur (XX') selon lequel s'étend ledit arbre d'entrée 13.

On remarquera par ailleurs que l'invention peut s'appliquer à un mécanisme de direction dit « à simple pignon », tel que le mécanisme illustré sur les figures 1, 6, 12 et 18, c'est-à-dire à un mécanisme au sein duquel le moteur d'assistance 5 vient en prise sur la colonne de direction 12 elle-même (ou, de manière équivalente, sur un prolongement de ladite colonne de direction 12 au sein de la structure porteuse 10), par exemple au moyen d'un réducteur 14 à engrenage, tel qu'un réducteur à roue tangente et vis sans fin, de telle sorte que le volant de conduite 13 et le moteur d'assistance 5 agissent tous deux sur la crémaillère 3 par l'intermédiaire du même pignon d'entraînement 6.

L'invention pourra toutefois tout aussi bien s'appliquer à d'autres types de mécanismes de direction, et notamment à un mécanisme dit « à double pignon », au sein duquel le moteur d'assistance 5 agit sur la crémaillère 3 en un point distinct et distant de la colonne de direction 12, par exemple au moyen d'un second pignon d'entraînement, dit « pignon auxiliaire » 206, distinct et distant du premier pignon d'entraînement 6 fixé à la colonne de direction 12, ou au moyen d'une transmission à vis à billes qui vient en prise sur la crémaillère 3 à distance dudit premier pignon d'entraînement 6.

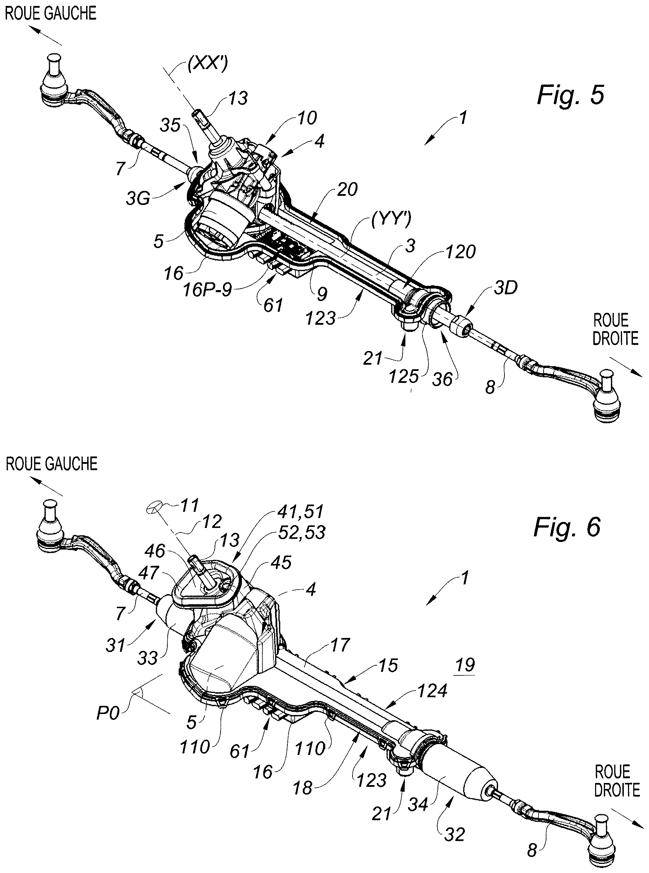

Selon l'invention, et tel que cela est notamment visible sur les figures 6, 12 à 16, 18, 20, 22 et 26, le dispositif de direction assistée 1 comprend également une coque de confinement 15, qui est distincte du sous-ensemble actionneur 4, et qui est formée par la réunion d'au moins une première portion de coque, dite « embase » 16, et d'une seconde portion de coque, dite « cloche » 17, distincte de l'embase 16, ladite embase 16 et ladite cloche 17 étant rapportées l'une sur l'autre et fixées l'une à l'autre par une jonction étanche 18 de manière à entourer le sous-ensemble actionneur 4 d'une enveloppe protectrice qui isole ledit sous-ensemble actionneur de l'environnement extérieur 19 du dispositif de direction, de telle sorte que ladite coque de confinement 15 empêche ledit sous-ensemble actionneur 4 d'être exposé aux projections d'eau et au brouillard salin (en provenance de l'environnement extérieur 19), et plus globalement aux projections de liquide, et le cas échéant aux projections de poussière ou de granulat, et notamment aux projections de sel (en provenance de l'environnement extérieur 19), lorsque le dispositif de direction assistée 1 est en place sur la structure réceptrice 2 du véhicule.

Tel que cela est illustré notamment sur les figures 6, 12, 14, 16, 18, 20, 22, 26, l'embase 16 formera de préférence un socle inférieur du dispositif de direction 1, socle qui est destiné à venir en appui contre la structure réceptrice 2 du véhicule (par une face externe 16E inférieure de l'embase 16), et dont une face (ici supérieure), destinée à être recouverte par la cloche 17, s'ouvre vers l'extérieur, pour donner accès (avant que la cloche 17 ne soit rapporté et fixée sur l'embase 16) à une empreinte 16P en creux qui offre au moins un emplacement 16P-4 (en creux) destiné à accueillir, au moins en partie, le sous-ensemble actionneur 4.

Ledit emplacement 16P-4 pour sous-ensemble actionneur 4 présentera de préférence une forme sensiblement conjuguée à celle dudit sous-ensemble actionneur 4, de sorte à faciliter le positionnement et le maintien dudit sous-ensemble actionneur 4 au sein de la coque de confinement 15, par rapport à l'embase 16.

La cloche 17 formera de préférence une portion supérieure de la coque 15, destinée à être orientée vers le haut du véhicule, à l'opposé de la structure réceptrice 2, et qui viendra coiffer l'embase 16 par le dessus, de sorte à masquer l'empreinte 16P en creux (et plus particulièrement l'emplacement 16P-4) et le sous-ensemble actionneur 4 préalablement placé dans ladite empreinte 16P (plus particulièrement dans ledit emplacement 16P-4).

Le fractionnement initial de la coque 15 en (au moins) une embase 17 et une cloche 16 séparées, et l'agencement proposé selon lequel l'embase 16 forme un socle inférieur et la cloche 17 forme une couverture supérieure, faciliteront notamment l'assemblage « à plat » du dispositif 1 de direction, puis le montage dudit dispositif 1 dans le véhicule V.

L'environnement extérieur 19 du dispositif 1 de direction comprend, de manière générale, l'ensemble des organes et volumes qui n'appartiennent pas au dispositif de direction 1 et qui entourent ledit dispositif de direction 1, à l'extérieur de la coque 15.

Plus particulièrement, le dispositif de direction 1 étant placé dans une cavité du véhicule, dite « cavité de réception », qui forme un volume "interne" du véhicule qui est situé dans le volume hors-tout occupé par le véhicule V, et qui correspond de préférence au compartiment moteur 43 dans lequel se trouve le moteur qui sert à propulser le véhicule, l'environnement extérieur 19 du dispositif 1 de direction comprend notamment l'atmosphère de ladite cavité de réception (en l'espèce l'atmosphère qui remplit le compartiment moteur 43) ainsi que tous les organes du véhicule (tels que moteur, circuit de frein, circuit de refroidissement, circuit lave-vitre, circuit d'huile moteur, circuit d'alimentation en carburant, etc.) distincts du dispositif de direction 1 et qui sont situés dans ladite cavité de réception ou bien dans des volumes voisins qui communiquent avec ladite cavité de réception, si bien que lesdits organes sont susceptibles de relâcher, par exemple en cas de fuite, des particules solides (poussières, limaille) ou des liquides (carburant, huile moteur, liquide de frein, liquide lave-vitre, etc.) dans la cavité de réception, autour du dispositif de direction 1.

La cavité de réception (le compartiment moteur 43) s'ouvrant de préférence sur l'extérieur du véhicule V, et plus particulièrement sur la route sur laquelle circule le véhicule, l'environnement 19 du dispositif de direction 1 comprend également l'atmosphère extérieure qui entoure le véhicule V.

Ainsi, l'atmosphère dans laquelle baigne le dispositif de direction 1, et a fortiori le dispositif de direction 1 lui-même, seront exposés aux corps étrangers de type particules solides (poussière, limaille, sel) et liquides (eau, huile moteur, carburant, liquide de frein, liquide de refroidissement, liquide lave-vitre, etc.), potentiellement polluants, abrasifs ou corrosifs, en provenance des autres organes du véhicule et/ou de l'atmosphère extérieure au véhicule.

En particulier, le dispositif de direction 1 sera ainsi exposé aux projections d'eau, aux projections de granulat ou aux nuages de poussière (typiquement de granulométrie moyenne supérieure à 5 µm), aux projections de sel en provenance de la route et/ou des roues, ainsi qu'au brouillard salin qui charge éventuellement l'atmosphère au voisinage du véhicule, et notamment au brouillard salin qui se développe entre la route et le soubassement du véhicule.

Avantageusement, la coque 15 de confinement forme une enveloppe protectrice, qui entoure et délimite une enceinte 20, que ladite coque 15 rend avantageusement inaccessible au moins aux projections d'eau et au brouillard salin, et de préférence à tous les corps étrangers formés par des particules solides (poussière, limaille, sel) et/ou des liquides (eau, brouillard salin, huile moteur, carburant, liquide de frein, liquide de refroidissement, liquide lave-vitre, etc.), en provenance de l'extérieur 19 du dispositif de direction 1.

Ladite coque 15 assure ainsi une fonction de protection, notamment une fonction d'étanchéité (et par conséquent une fonction de protection contre la corrosion), qui permet de protéger de l'intrusion de corps étrangers solides et/ou liquides (tels que décrits plus haut) tous les organes du dispositif de direction 1 qui sont placés à l'abri dans ladite coque 15, à l'intérieur de l'enceinte 20.

Avantageusement, l'invention permet, comme cela a été dit plus haut, de séparer la fonction de protection (fonction d'étanchéité, notamment anti-corrosion), ici attribuée à la coque de confinement 15, des fonctions mécaniques de support, de guidage et d'entraînement des organes mobiles du dispositif de direction 1, fonctions de support, de guidage et d'entraînement qui sont ici attribuées au sous-ensemble actionneur 4 qui est placé à l'abri dans l'enceinte 20 délimitée par ladite coque de confinement 15, et plus particulièrement qui sont attribuées à la structure porteuse 10 qui forme en quelque sorte l'ossature rigide, de préférence métallique, dudit sous-ensemble actionneur 4.

Cette complémentarité permet donc de spécialiser et d'optimiser les structures correspondantes du dispositif de direction 1, selon la fonction qui leur est exclusivement dévolue.

Avantageusement, la coque de confinement 15 forme, le cas échéant en coopération avec la structure réceptrice 2 contre laquelle ladite coque 15 vient en appui une fois que le dispositif de direction 1 est monté et fixé dans le véhicule V, un écran, ou une barrière, autour du sous-ensemble actionneur 4, ledit écran s'interposant (en épaisseur) entre ledit sous-ensemble actionneur 4 et l'environnement extérieur 19, et plus particulièrement entre ledit sous-ensemble actionneur 4 d'une part et la route et les passages des roues directrices d'autre part, de manière à séparer le sous-ensemble actionneur 4 de l'environnement extérieur 19.

La présence de la coque de confinement 15, qui forme un écran qui masque notamment le sous-ensemble actionneur 4 vis-à-vis de l'environnement extérieur 19, empêche ainsi avantageusement l'enceinte 20 de communiquer avec l'atmosphère extérieure au véhicule, ou à tout le moins empêche ladite enceinte 20 de communiquer directement et librement avec l'atmosphère extérieure au véhicule, et notamment avec l'atmosphère du compartiment moteur 43 dans lequel se trouve le dispositif 1 de direction, si bien que le sous-ensemble actionneur 4, et plus particulièrement la structure porteuse 10, est confiné(e) dans l'enceinte 20 et reste ainsi inaccessible aux projections d'eau, à la poussière, ou au sel (ou au brouillard salin) qui proviennent de l'environnement extérieur 19, et plus particulièrement qui proviennent du pare-brise, de la route, ou bien encore des passages de roues qui s'ouvrent latéralement de part et d'autre du compartiment moteur 43.

Grâce à l'agencement enveloppant de la coque de confinement 15, aucune surface (notamment aucune surface métallique) du sous-ensemble actionneur 4, et en particulier aucune surface (notamment aucune surface métallique) de la structure porteuse 10, n'est directement exposée à l'environnement extérieur 19, c'est-à-dire n'est laissée sans protection de la coque 15, si bien qu'aucune projection d'eau (liquide), aucun ruissellement d'eau (en provenance par exemple du pare-brise) ou d'un autre liquide (par exemple en cas de fuite d'huile moteur ou de fuite de carburant), aucun brouillard salin, et aucune poussière ne peut atteindre le sous-ensemble actionneur 4, et en particulier la structure porteuse 10, à l'intérieur de l'enceinte 20.

La coque de confinement 15 procure ainsi une étanchéité « entrante », en empêchant la pénétration d'eau liquide, de brouillard salin, de poussière, ou de tout autre corps étranger liquide ou solide dans l'enceinte 20, ce qui évite l'encrassement, et surtout la corrosion du sous-ensemble actionneur 4.

A titre indicatif, le dispositif 1 de direction, et plus particulièrement la coque de confinement 15, pourra être agencé et dimensionné de sorte à pouvoir résister à une pénétration d'eau liquide portée à une pression égale ou supérieure à 2 bar, à 3 bar, voire à 4 bar (absolus, c'est-à-dire à deux fois, trois fois voire quatre fois la pression atmosphérique), afin de résister aux jets de nettoyeurs « haute pression ».

Selon une possibilité de mise en oeuvre, la résistance de la coque de confinement 15, et en particulier l'étanchéité de la jonction étanche 18, sera suffisante pour résister à un jet d'eau (de préférence chaude, de température supérieure à 50°C voire égale à 80 °C) porté à une pression supérieure à plus de 50 bar, de préférence à 100 bar, et émis par une buse distante de moins de 20 cm (typiquement entre 80 mm et 100 mm) de ladite coque 15.

De même, le dispositif 1 de direction, et plus particulièrement la coque de confinement 15, pourra être agencé et dimensionné de sorte à pouvoir résister à une pénétration de brouillard salin se trouvant à une pression comprise entre 900 mbar et (au moins) 1,2 bar (c'est-à-dire sensiblement aux pressions atmosphériques usuelles), voire 1,5 bar.

Par ailleurs, la coque de confinement 15 procure de préférence une étanchéité « sortante », en empêchant le lubrifiant, de type graisse, qui est contenu dans l'enceinte 20, et plus particulièrement dans le sous-ensemble actionneur 4, de s'échapper du dispositif 1 de direction.

Avantageusement, la coque de confinement 15 comprendra des interfaces fonctionnelles 21, 22, 31, 32, 41, 51, 61 (détaillées ci-après et visibles notamment sur les figures 6, 17 et 18) qui permettront des échanges entre l'enceinte 20, c'est-à-dire l'intérieur de la coque 15, et l'extérieur 19, au-delà des limites de la coque 15, lesdits échanges étant nécessaires à la mise en place et au bon fonctionnement du dispositif 1 de direction, c'est-à-dire aux interactions normales du dispositif 1 de direction avec le véhicule V.

Typiquement, ces interfaces fonctionnelles pourront permettre : une interaction d'arrimage permettant la fixation de la coque 15 sur la structure réceptrice 2, une interaction de manoeuvre permettant de transmettre aux roues les mouvements (de translation) de la crémaillère 3, c'est-à-dire les déplacements des extrémités 3G, 3L de la crémaillère 3 par rapport à la coque 15, une interaction de commande permettant à la colonne de direction 12 mue par le volant 11 de contrôler l'arbre d'entrée 13 et donc l'angle de braquage et l'effort de braquage exercé sur la direction, une interaction de connexion assurant les raccordements électriques du calculateur 9 et du moteur d'assistance 5, une interaction de respiration permettant un équilibrage de pression entre l'atmosphère confinée de l'enceinte 20 et l'atmosphère extérieure, notamment en cas de variations brusques de température liées par exemple à un refroidissement soudain de la coque 15 provoqué par le passage du véhicule dans une étendue d'eau, et le cas échéant une interaction de purge permettant de drainer vers l'extérieur de l'enceinte 20 d'éventuels condensats d'eau qui se formeraient malgré tout dans ladite enceinte 20, notamment suite à un brusque refroidissement de l'air contenu dans ladite enceinte 20.

Bien entendu, les échanges intentionnellement rendus possibles par ces interfaces fonctionnelles 21, 22, 31, 32, 41, 51, 61 seront restreints, et en quelque sorte filtrés, par la coque de confinement 15, de manière à empêcher la pénétration d'eau liquide, de brouillard salin ou de poussière, ainsi que la fuite de lubrifiant, au niveau des interfaces.

En d'autres termes la coque de confinement 15 formera ainsi un écran continu tout autour de l'enceinte 20, et donc tout autour du sous-ensemble actionneur 4, écran qui s'interrompra uniquement au niveau d'orifices d'accès 29, 30, 35, 36, 48, 53 situés au sein des interfaces fonctionnelles 21, 22, 31, 32, 41, 51, 61, étant entendu que lesdites interfaces fonctionnelles rempliront la fonction de sas, c'est-à-dire protégeront les orifices d'accès de manière à garantir un accès sélectif à l'enceinte 20, accès sélectif qui consistera à autoriser l'accès à l'enceinte 20 pour permettre les interactions fonctionnelles nécessaires au fonctionnement du dispositif 1 (notamment les passages de connexions et les mouvements d'organes mobiles de la direction), tout en interdisant l'accès de ladite enceinte 20 à l'eau liquide, au brouillard salin et à la poussière, ou aux autres corps étrangers, solides et/ou liquides, mentionnés plus haut, de manière à éviter l'intrusion de ces substances perturbatrices ou corrosives dans le dispositif 1 de direction et l'entrée desdites substances en contact avec les organes du dispositif 1 de direction qui sont placés à l'abri dans la coque 15, tels que le sous-ensemble actionneur 4.

A cet effet, la coque de confinement 15, et plus particulièrement les interfaces fonctionnelles 21, 22, 31, 32, 41, 51, 61 de ladite coque 15, pourront comporter, en complément de l'embase 16 et de la cloche 17, des éléments auxiliaires d'étanchéité 27, 28, 33, 34, 46, 47 chargés d'assurer l'étanchéité de la coque 15 au niveau des interfaces fonctionnelles.

Parmi les éléments auxiliaires d'étanchéité, de préférence souples, et par exemple en élastomère, on pourra trouver des joints racleurs ou des soufflets 33, 34, capables d'assurer l'étanchéité de la coque 15 malgré la présence d'organes du dispositif 1 de direction qui sont montés mobiles par rapport à la coque 15, à travers l'interface fonctionnelle concernée, ou bien encore des joints statiques 46, 47 permettant un accouplement étanche de la coque 15 au véhicule V au niveau desdites interfaces fonctionnelles.

Ceci étant, on notera que l'embase 16 et la cloche 17, qui forment ensemble une portion rigide de la coque 15, c'est-à-dire une portion autoporteuse de ladite coque 15, de forme sensiblement invariante, constitueront de préférence, par comparaison avec les interfaces fonctionnelles, la plus grande partie de la coque de confinement 15, et présenteront ainsi une surface de couverture cumulée, autour de l'enceinte 20, qui représente la majorité de la surface totale couverte par l'ensemble de la coque 15 et des interfaces fonctionnelles autour de ladite enceinte 20.

En tout état de cause, le dispositif de direction 1 sera donc agencé de telle sorte que toute ouverture de la coque de confinement 15 (qui traverse la paroi de ladite coque 15 de part en part, sur toute l'épaisseur de ladite coque), et donc plus particulièrement toute interface fonctionnelle 21, 22, 31, 32, 41, 51, 61 du dispositif 1, est pourvue d'éléments auxiliaires d'étanchéité qui assurent, en coopération avec l'embase 16 et la cloche 17, l'étanchéité de la coque 15, et donc de l'enceinte 20, vis-à-vis au moins de l'eau liquide et du brouillard salin, voire de la poussière ou d'autres corps étrangers solides ou liquides, et ce de manière à éviter toute exposition directe des surfaces des organes contenus dans l'enceinte 20, et plus particulièrement toute exposition directe des surfaces du sous-ensemble actionneur 4 et de la structure porteuse 10, à l'environnement extérieur 19.

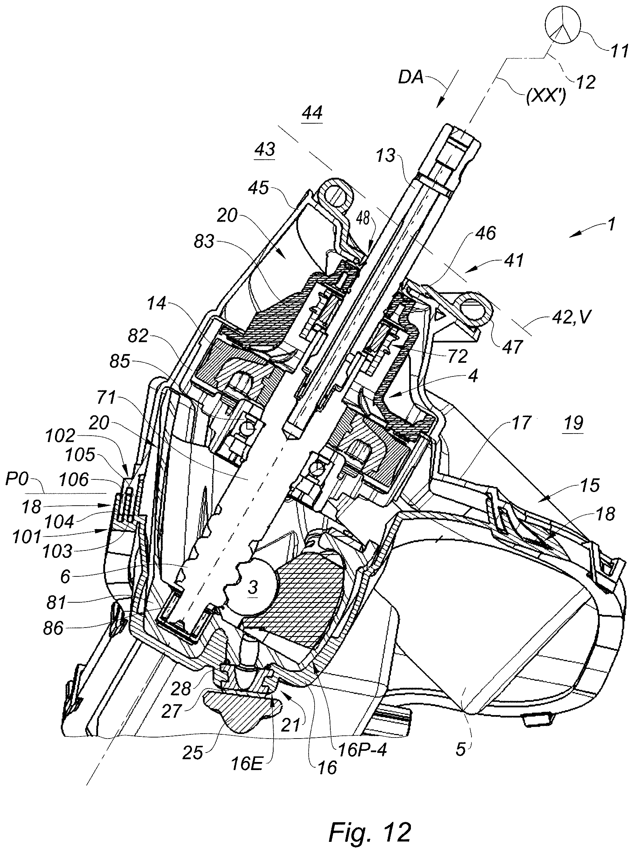

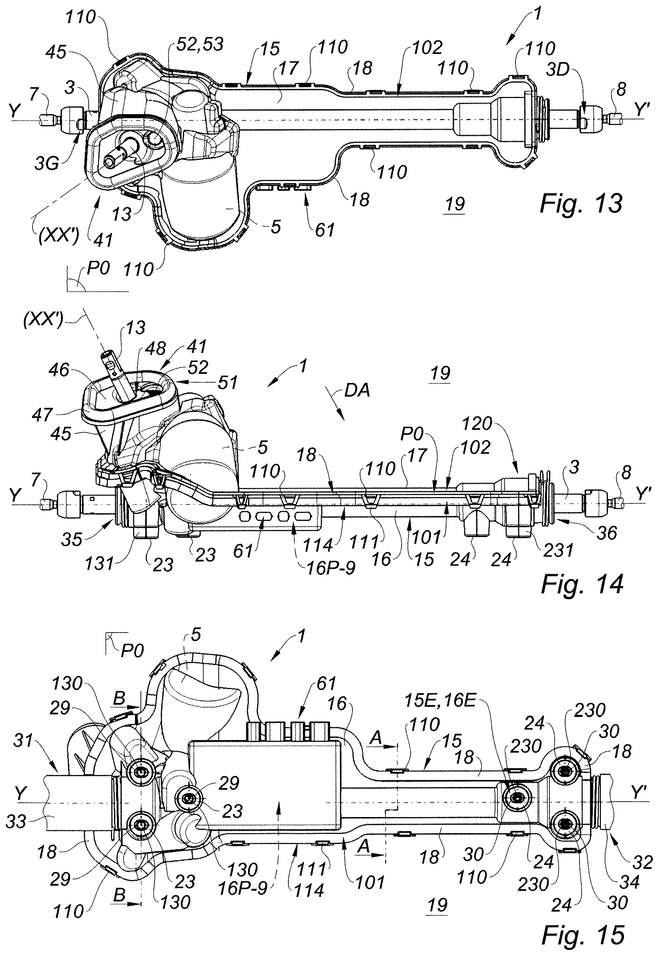

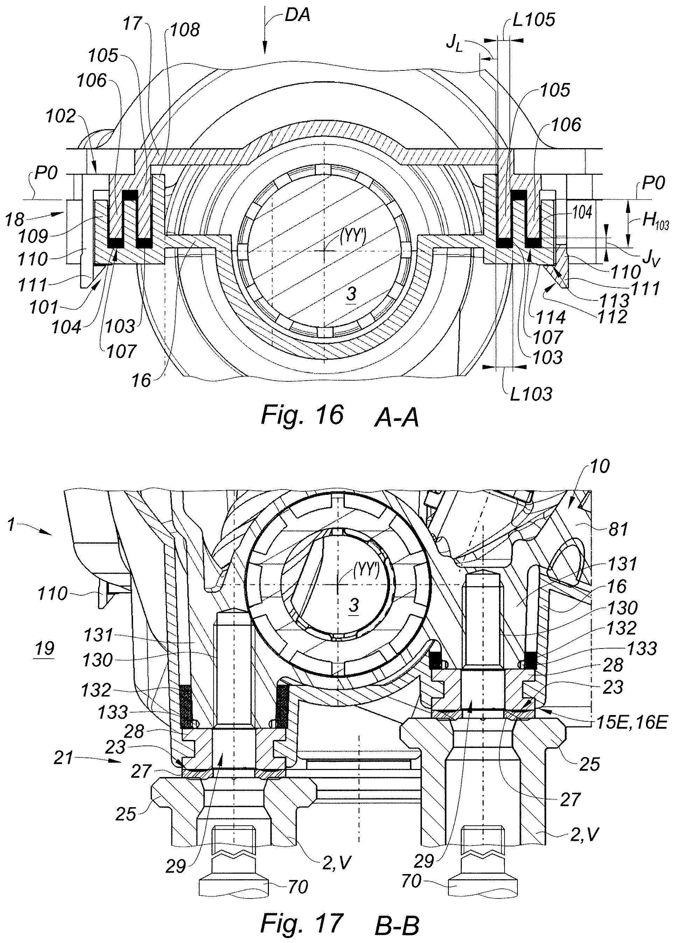

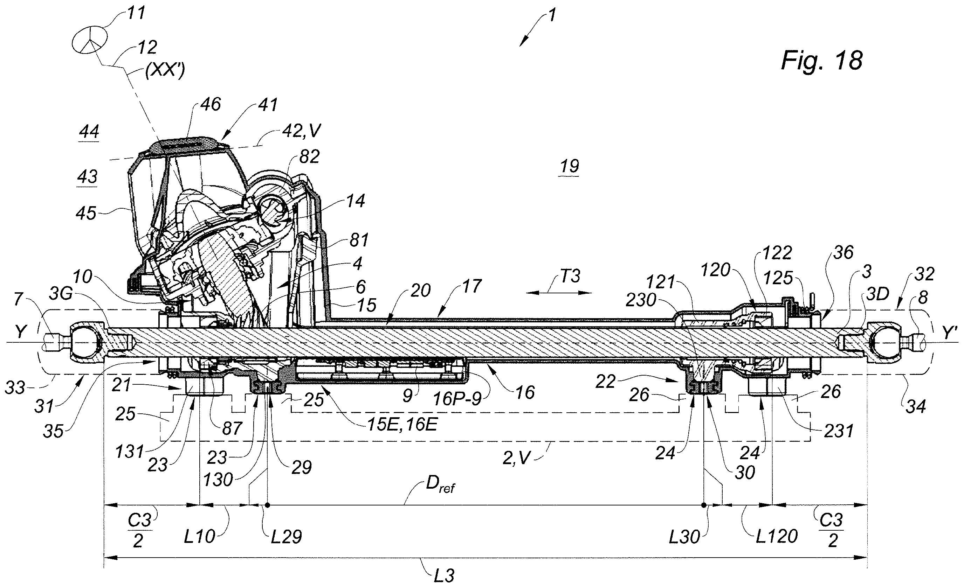

La coque de confinement 15 selon l'invention pourra ainsi comporter, tel que cela est notamment illustré sur les figures 6, 12, 17 et 18 :
- une ou plusieurs interfaces d'arrimage 21, 22, au niveau desquelles on opère la fixation du dispositif de direction 1, et plus particulièrement la fixation de la coque 15 et/ou du sous-ensemble actionneur 4, sur la structure réceptrice (berceau) 2 prévue à cet effet au sein du véhicule V. Au niveau de ces interfaces d'arrimage 21, 22, la coque de confinement 15, et plus particulièrement l'embase 16, présentera, sur sa face externe 15E, respectivement 16E (à l'opposé de l'enceinte 20), des surfaces de siège 23, 24, de préférence sensiblement planes, conformées de façon à venir en appui, le cas échéant par l'intermédiaire de cales de réglage 27 (tel que cela est détaillé sur la figure 17), contre des points d'ancrage 25, 26, tels que des plots ou des bossages, appartenant à la structure réceptrice 2. Les éléments auxiliaires d'étanchéité correspondants pourront par exemple comprendre un insert 28, de préférence métallique, qui est noyé dans l'épaisseur de la coque 15 (en l'espèce dans l'épaisseur de l'embase 16) et délimite à travers la coque 15 (à travers l'embase 16) un orifice d'accès 29, 30 pour permettre le passage d'un élément de retenue 70, tel qu'une vis, un goujon (tel que représenté sur la figure 17), un tirant, etc. qui assure la fixation, ici le serrage, du dispositif 1 contre la structure réceptrice 2. Les éléments auxiliaires d'étanchéité de cette interface d'arrimage pourront également comprendre, le cas échéant, la cale de réglage 27 susmentionnée, ainsi que les parois du point d'ancrage 25, 26 qui, en coopération avec l'élément de retenue 70 (vis, goujon ou tirant), permettront de masquer l'orifice d'accès 29, 30 pratiqué dans la coque 15 une fois le dispositif 1 de direction installé sur la structure réceptrice 2.
- des interfaces de manoeuvre 31, 32, ici une interface de manoeuvre gauche 31 et une interface de manoeuvre droite 32, au niveau desquelles les biellettes de direction 7, 8 émergent de la coque de confinement 15 pour venir en prise sur les porte-fusées, de manière à pouvoir transmettre les mouvements de translation T3 de la crémaillère 3 auxdits porte-fusées afin de modifier l'orientation des roues. De préférence, l'étanchéité sera assurée, au niveau des interfaces de manoeuvre 31, 32, par des éléments auxiliaires d'étanchéité de type soufflets 33, 34, chaque soufflet 33, 34 joignant une extrémité (une extrémité longitudinale, considérée selon l'axe de longitudinal (YY')) de la portion rigide de la coque 15 à une portion de la biellette de direction 7, 8 correspondante, tel que cela est notamment illustré sur les figures 6 et 18, afin de recouvrir l'extrémité 3G, 3L correspondante de la crémaillère 3, et donc afin de masquer les orifices d'accès 35, 36 qui permettent à ladite crémaillère 3 d'émerger de la portion rigide de la coque 15 formée notamment par l'embase 16 et la cloche 17. Chaque soufflet 33, 34 est avantageusement déformable élastiquement, et notamment flexible et extensible (selon l'axe longitudinal (YY')), de sorte à pouvoir accompagner tous les mouvements de la biellette 7, 8 que ledit soufflet enserre.
- une interface de commande 41, par laquelle la coque 15, et plus préférentiellement la cloche 17, vient en appui contre le tablier 42 du véhicule, c'est-à-dire contre la cloison qui sépare le compartiment avant (compartiment moteur 43) du véhicule V de l'habitacle 44 dudit véhicule (habitacle qui accueille le conducteur et/ou les passagers), tel que cela est illustré schématiquement sur les figures 12 et 18. Au niveau de cette interface de commande 41, l'arbre d'entrée 13 émerge de la coque 15, par un orifice d'accès 48, pour se connecter à la colonne de direction 12, et donc intégrer ladite colonne de direction 12 en se solidarisant ainsi en rotation avec le volant de conduite 11. On notera que, de préférence, la coque 15, et plus particulièrement la cloche 17, présente, d'un seul tenant avec la portion de la coque 15 qui recouvre la structure porteuse 10, respectivement d'un seul tenant avec la portion de ladite cloche 17 qui recouvre la structure porteuse 10, une portion 45 d'accouplement au tablier 42 qui est agencée pour venir en appui contre le tablier 42 du véhicule. Ladite portion d'accouplement 45 forme une sorte de cheminée (ou tourelle) qui s'étend en s'éloignant de la crémaillère 3, le long et autour de l'axe directeur (XX') de l'arbre d'entrée 13, pour rejoindre le tablier 42. Avantageusement, une telle réalisation d'un seul tenant permet notamment une fabrication simple par moulage, et procure à la coque 15, et plus particulièrement à la cloche 17, une structure stable, robuste, facile à assembler, et garantissant une bonne étanchéité. L'étanchéité de l'interface de manoeuvre 41 pourra être réalisée par un organe auxiliaire d'étanchéité 46 de type joint, de préférence en élastomère, en mousse ou en combinaison élastomère/mousse, ledit joint pouvant se présenter sous forme d'une nappe plate, éventuellement pourvue d'un boudin périphérique 47, et ledit joint étant interposé et comprimé entre la portion rigide de la coque 15 (ici la cheminée 45) et le tablier 42.
- une interface de respiration 51, visible notamment sur les figures 6 et 13, au niveau de laquelle la coque 15 est pourvue d'un élément « respirant » 52, c'est-à-dire réalisé dans un matériau perméable à l'air mais hydrophobe, du genre pastille en Gore-Tex®, de sorte à permettre à l'air (mais pas à l'eau) de circuler entre l'enceinte 20 et l'extérieur de l'enceinte, afin d'assurer un équilibrage de pression entre la pression régnant dans l'enceinte 20 et la pression régnant à l'extérieur de la coque 15. De préférence, l'élément respirant 52 créera ainsi un orifice d'accès 53 de type poreux, assurant une communication sélective, de type prise d'air, entre l'enceinte 20 et l'habitacle 44 du véhicule. De façon particulièrement préférentielle, l'interface de respiration 51 est située au même niveau que l'interface de commande 41, de telle sorte que ces deux interfaces 41, 51 sont communes et partagent un même élément d'étanchéité auxiliaire 46, 47 (ici un joint à boudin périphérique 47), c'est-à-dire que l'élément respirant 52 (et donc l'orifice d'accès poreux 53) est contenu dans le même « sas » 41 que l'orifice d'accès 48 de l'arbre d'entrée 13, et profite de la protection du même élément d'étanchéité auxiliaire 46, 47.
- une interface de connexion électrique 61, comportant par exemple un ou plusieurs connecteurs à broches, étanches, permettant de raccorder le calculateur 9 à l'alimentation électrique du véhicule (batterie) ainsi qu'au réseau de bord (Controller Area Network), et/ou permettant de raccorder le moteur d'assistance 5 à la batterie.
- éventuellement une interface de purge (non représentée), destinée à évacuer de l'enceinte 20 un éventuel condensat issu de vapeur d'eau ou même d'eau liquide qui aurait réussi malgré tout à pénétrer accidentellement dans ladite enceinte 20. A cet effet, le point bas de la coque 15 pourra être pourvu d'une valve de drainage automatique formant un clapet anti-retour permettant à l'eau liquide de s'évacuer de l'enceinte 20 mais pas d'y pénétrer.

Ainsi, selon une caractéristique préférentielle, l'invention peut porter en tant que telle sur un dispositif 1 de direction assistée qui comprend un sous-ensemble actionneur 4 (tel que défini plus haut), ainsi qu'une coque de confinement 15, qui est distincte dudit sous-ensemble actionneur 4 et qui est formée par la réunion d'au moins une première portion de coque, dite « embase » 16, et d'une seconde portion de coque, dite « cloche » 17, qui sont rapportées l'une sur l'autre et fixées l'une à l'autre par une jonction étanche 18 de manière à délimiter une enceinte 20 dans laquelle est logé ledit sous-ensemble actionneur 4, ladite coque de confinement 15 étant pourvues d'orifices d'accès 29, 30, 35, 36, 48, 53 donnant accès, depuis l'extérieur 19 de la coque, à l'enceinte 20 située à l'intérieur de ladite coque 15, et ladite coque de confinement 15 étant agencée de telle sorte que tous les orifices d'accès (c'est-à-dire plus globalement tous les accès à l'enceinte 20, et plus particulièrement tous les accès au sous-ensemble actionneur 4 qui peuvent subsister à travers l'embase 16 et la cloche 17) sont protégés par des interfaces fonctionnelles 21, 22, 31, 32, 41, 51, 61 qui assurent, une fois le dispositif 1 mis en place et fixé sur le véhicule V, l'étanchéité de la coque 15 au moins contre l'intrusion d'eau liquide et de brouillard salin dans l'enceinte 20, et de préférence également contre l'intrusion de poussière ou de tout autre corps étranger solide (poussière, limaille, sel) et/ou liquide (tel que : eau, huile moteur, carburant, liquide de frein, liquide de refroidissement, liquide lave-vitre, etc.) dans ladite enceinte 20.

Parmi ces interfaces fonctionnelles, on pourra trouver au moins l'une et/ou l'autre des interfaces fonctionnelles 21, 22, 31, 32, 41, 51, 61 décrites dans ce qui précède, ou toute combinaison desdites interfaces, ladite combinaison comprenant par exemple au moins une ou des interfaces d'arrimage 21, 22, une ou deux interfaces de manoeuvre 31, 32, et une interface de commande 41.

Ainsi, selon l'invention, toutes les fenêtres découpées dans la coque 15, et plus particulièrement toutes les fenêtres ménagées dans le sous-ensemble formé par l'embase 16 et la cloche 17 pour y former des orifices d'accès 29, 30, 35, 36, 48, 53, seront garnies d'éléments auxiliaires d'étanchéité 27, 28, 33, 34, 46, 47 chargés d'assurer l'étanchéité de la coque 15, au niveau des interfaces fonctionnelles, afin notamment d'éviter toute exposition directe à l'eau, au brouillard salin et à la poussière des organes du dispositif 1 placés à l'abri dans l'enceinte 20, tels que le sous-ensemble actionneur 4.

De préférence, la cloche 17, ou l'embase 16, et de façon particulièrement préférentielle aussi bien la cloche 17 que l'embase 16, est réalisée en matière plastique, c'est-à-dire dans un matériau polymère, et plus préférentiellement dans un polymère thermoplastique permettant une fabrication par moulage par injection.

Selon une variante de réalisation dite « à coque mixte », on pourrait envisager d'utiliser une embase 16 en métal (par exemple en alliage d'aluminium ou de magnésium) sur laquelle viendrait se fixer une cloche 17 en polymère.

Toutefois, on préférera utiliser une embase 16 en polymère et une cloche 17 en polymère.

De préférence, le matériau polymère ainsi utilisé pourra être renforcé de fibres, par exemple de fibres de verre, de carbone ou d'aramide, ou tout mélange de fibres contenant au moins deux de ces catégories de fibres.

Le ou les matériaux polymères utilisés pour former la cloche 17 et/ou respectivement l'embase 16 seront choisis de sorte à être rigides ou semi-rigides, c'est-à-dire à présenter typiquement un module d'Young supérieur à 3 GPa, au moins sur la plage prévisible de températures de fonctionnement du dispositif 1 de direction, c'est-à-dire au moins sur la plage allant de -40°C à +125°C.

A titre indicatif et non limitatif, on pourra notamment utiliser comme matériaux polymères, pour former la cloche 17 et/ou l'embase 16 : un Polyamide (PA), un Polyamide aromatique (PPA), un Polybuthylene Terephatlate (PBT), un Polyéthylène Térephtalate (PET), un Polypropylène (PP), ou une Polycétone (PK).

Avantageusement, l'utilisation de portions de coque 15, et plus particulièrement d'une cloche 17 et/ou d'une embase 16, en polymère confère à la coque de confinement 15 une grande légèreté, une excellente étanchéité, et une excellente tenue à corrosion (voire une insensibilité à la corrosion).

En outre, on peut ainsi fabriquer facilement et à moindre coût la cloche 17 et l'embase 16 par moulage.

De surcroît, selon une caractéristique qui peut constituer une invention à part entière, la réalisation d'une portion de coque (rigide) en matériau polymère permet avantageusement d'effectuer un marquage d'identification directement sur la surface apparente de la coque 15, et plus particulièrement directement sur la surface apparente de la cloche 17 ou de l'embase 16, sur le matériau, voire dans le matériau polymère constitutif de ladite coque 15, respectivement sur ou dans le matériau constitutif de ladite cloche 17, ou de ladite embase 16.

On pourra ainsi imprimer ou graver sur la coque 15 un marquage d'identification comprenant par exemple des caractères alphanumériques, lisibles à l'oeil nu et/ou au moyen d'un appareil de reconnaissance optique, ou bien encore un code graphique standardisé, de type code à barres ou DataMatrix® lisible par un appareil (artificiel) de lecture optique approprié, de type scanner.

Le marquage d'identification pourra être effectué par tout procédé adapté, tel que frappe par un poinçon (le cas échéant à chaud), sablage à travers un pochoir, gravure laser, micro-percussion, etc.

Avantageusement, on pourra ainsi associer définitivement un marquage d'identification durable et indélébile à la coque de confinement 15, et donc plus globalement au dispositif de direction 1.

Grâce à l'invention, il ne sera plus nécessaire d'utiliser, pour identifier le dispositif de direction 1, d'étiquette autocollante, qui serait collée sur la coque 15, mais qui présenterait le risque de se dégrader ou de se détacher avec le temps.

On notera de surcroît que les procédés de gravure ou de marquage connus permettent avantageusement, par une simple altération surfacique du matériau polymère (et notamment par altération mécanique en relief, par abrasion, ou par altération thermique), de modifier localement la texture et l'aspect du polymère constitutif de la coque 15, et ainsi d'obtenir un contraste (clair-foncé) élevé entre les zones marquées et les zones vierges, ce qui garantit durablement une excellente lisibilité dudit marquage.

Ici encore, le procédé de marquage selon l'invention permet d'obtenir un marquage d'identification durablement lisible, sans qu'il ne soit nécessaire de recourir à une étiquette employant un fond coloré spécifique pour faire ressortir lisiblement des caractères ou un code sur ledit fond coloré.

Par ailleurs, selon une autre caractéristique préférentielle qui peut également constituer une invention à part entière, la coque de confinement 15, et plus particulièrement la cloche 17 et/ou l'embase 16 pourront être teintées (de préférence dans la masse) de sorte à permettre l'identification visuelle immédiate du modèle de coque 15, ou plus préférentiellement du modèle de dispositif de direction 1 associé à ladite coque 15, selon une code de couleurs prédéterminé.

A ce titre, on notera que l'utilisation de matériaux polymères permettra de teinter facilement la cloche 17 et/ou l'embase 16 dans la masse, le cas échéant par l'ajout d'un colorant approprié lors de la préparation du matériau polymère.

Avantageusement, l'invention permettra ainsi de différencier visuellement, grâce à un code de couleurs prédéfini, la coque de confinement 15, et donc le dispositif de direction 1, selon le mécanisme de direction utilisé et/ou selon le modèle de véhicule auquel le dispositif 1 est destiné.

A titre d'exemple, on pourra par exemple associer à un format donné de coque, c'est-à-dire à des cloches 17 de format identique, respectivement à des embases 16 de format identique, différents types de mécanismes de direction, par exemple intégrant des moteurs d'assistance 5 plus ou moins puissants selon le véhicule à équiper, et affecter des couleurs différentes aux coques 15, c'est-à-dire aux cloches 17, respectivement aux embases 16, selon le type de mécanisme qu'elles doivent recevoir.

Avantageusement, on pourra ainsi identifier le mécanisme de direction contenu dans la coque 15, même après que la coque 15 aura été scellée autour dudit mécanisme de direction et que ledit mécanisme (et notamment son moteur 5) ne sera donc plus visible.

Selon un autre exemple de mise en oeuvre, on pourra également différencier entre elles, au moyen de plusieurs couleurs différentes, des coques 15 (et plus spécifiquement des cloches 17, respectivement des embases 16) de formats différents, et notamment des coques 15 destinées à être fixées sur des structures réceptrices 2 de configurations distinctes (par exemple appartenant à des modèles de véhicules distincts). Le cas échéant, lorsqu'un même type de mécanisme de direction peut être adapté sur plusieurs modèles de véhicules distincts, on pourra ainsi distinguer immédiatement, grâce à la couleur de la coque, le modèle de véhicule auquel est destiné le dispositif de direction 1.

Dans tous les cas, grâce au détrompage visuel procuré par le code de couleurs, on simplifie grandement les opérations d'approvisionnement et d'assemblage du dispositif de direction 1.

Selon une variante particulièrement préférentielle de mise en oeuvre, on pourra associer la couleur de la cloche 17 à un premier paramètre caractéristique du mécanisme de direction contenu dans la coque 15, ledit premier paramètre pouvant être par exemple le modèle du mécanisme ou sa puissance (et notamment la puissance du moteur d'assistance), c'est-à-dire que la couleur de la cloche 17 sera représentative du mécanisme de direction mis en place dans la coque 15, tandis que la couleur de l'embase 16 sera associée à un second paramètre caractéristique du véhicule, et plus particulièrement de la structure réceptrice 2 sur laquelle le dispositif de direction 1 doit être monté (par exemple le modèle de véhicule, la configuration des surfaces de siège 23, 24 de la coque 15, etc.), si bien que la couleur de l'embase 16 sera représentative du véhicule-cible destinataire du dispositif 1 de direction.

Bien entendu, on pourra, inversement, caractériser intrinsèquement le mécanisme de direction par la couleur de l'embase 16, et le véhicule cible par la couleur de la cloche 17.

Ainsi, la combinaison de couleurs de la coque de confinement 15, c'est-à-dire la combinaison des couleurs respectives de la cloche 17 et de l'embase 16, renseignera visuellement et directement, selon un codage bicolore préétabli, à la fois sur la nature du mécanisme de direction et sur le modèle de véhicule auquel le dispositif de direction 1 est destiné, ce qui permettra d'opérer sans erreur et de façon particulièrement rapide, sur les lignes de fabrication, une sélection du dispositif de direction 1 approprié, tant au moment de l'approvisionnement que lors du montage dudit dispositif 1 de direction au sein du véhicule V.

De préférence, tel que cela est notamment visible sur les figures 6, 12 à 15, 20, et 22, le sous-ensemble actionneur 4 comprend un arbre d'entrée 13 qui est destiné à être accouplé à une colonne de direction 12 portant un volant de conduite 11, ledit arbre d'entrée 13 s'étendant (longitudinalement) selon un axe directeur (XX'), ici rectiligne.

Le plan de joint P0 de la coque de confinement 15, selon lequel la cloche 17 épouse l'embase 16, est alors de préférence sécant audit axe directeur (XX').

En d'autres termes, le plan de joint P0 au niveau duquel s'opère la jonction étanche 18 entre les bords respectifs de la cloche 17 et de l'embase 16 n'est pas parallèle à l'axe directeur (XX') de l'arbre d'entrée 13, et en particulier ne contient pas ledit axe directeur (XX').

Selon la conformation du tracé de la jonction étanche 18, le plan de joint P0 pourra notamment correspondre, le cas échéant, au plan de joint « moyen » qui s'approche au mieux, par exemple en considération d'un critère de régression linéaire, du tracé de la jonction étanche 18, voire qui contient ledit tracé si ledit tracé est inscriptible dans un plan.

En pratique, le plan de joint P0 est de préférence sensiblement horizontal, et agencé de telle sorte qu'il forme la limite verticalement supérieure de l'embase 16, c'est-à-dire que l'embase 16 est située majoritairement, et de préférence sensiblement entièrement, sous ledit plan de joint P0, tandis qu'il forme la limite inférieure de la cloche 17, de telle sorte que ladite cloche 17 est située majoritairement, et de préférence sensiblement entièrement, au-dessus dudit plan de joint P0.

Le plan de joint P0, et plus spécifiquement la limite entre la cloche 17 et l'embase 16, est de préférence sensiblement parallèle à l'axe longitudinal (YY') de la crémaillère, de sorte que la coque 15 est ainsi, en quelque sorte, fendue (en une cloche 17 et une embase 16) sensiblement selon ledit axe longitudinal (YY').

A titre indicatif, l'axe directeur (XX') peut former par rapport au plan de joint P0 moyen un angle (minimal) d'inclinaison compris entre 30 degrés, voire 45 degrés, et 90 degrés (cas d'un axe normal au plan de joint P0).

En tout état de cause, un tel agencement de l'axe directeur (XX'), transverse au plan de joint P0, permet avantageusement de faire sensiblement coïncider ledit axe directeur (XX') avec la direction, dite « direction d'emboîtement », selon laquelle la cloche 17 s'emboîte sur l'embase 16.

Une telle orientation simplifie l'assemblage du dispositif 1 de direction, car il est possible de mettre en place, et en l'occurrence d'empiler, selon une même direction d'approche DA commune (ici une direction sensiblement verticale et descendante sur les figures 12, 14, 20, 22, et qui coïncide sensiblement avec la direction d'emboîtement), d'abord le sous-ensemble actionneur 4, porteur de l'arbre d'entrée 13, que l'on dépose (selon un mouvement d'approche opéré selon ladite direction d'approche DA) dans l'embase 16 ouverte, puis la cloche 17 que l'on rapporte sur le sous-ensemble actionneur 4, selon cette même direction d'approche DA, en enfilant la cheminée 45 de la cloche 17 sur l'arbre d'entrée 13 pour faire passer ledit arbre d'entrée 13 à travers l'orifice d'accès 48, de telle sorte que l'on coiffe le sous-ensemble actionneur 4, ainsi que l'embase 16 située sous ce dernier, avec la cloche 17 que l'on applique en appui contre, et de préférence que l'on emboîte dans, ladite embase 16 pour former la jonction étanche 18.

En outre, l'orientation de l'axe directeur (XX') par rapport au plan de joint P0 permet de réaliser la cloche 17, et en particulier la cheminée 45 qui borde et entoure l'orifice d'accès 48, d'un seul tenant tout autour de l'axe directeur (XX'), en continu sur 360 degrés.

On évite ainsi de créer, autour de l'axe directeur (XX'), la moindre zone de fragilité. En particulier, la jonction étanche 18 n'étant pas parallèle à l'axe directeur (XX'), mais s'enroulant au contraire autour dudit axe directeur (XX'), ladite jonction étanche 18 ne formera pas, par conséquent, une zone d'amorce de fissuration qui serait de nature à favoriser un écartement (décollement) accidentel de la cloche 17 par rapport à l'embase 16, et ainsi une perte d'étanchéité.

La robustesse et l'étanchéité de la coque de confinement 15 s'en trouvent donc accrues.

Tel que cela a été dit plus haut, le sous-ensemble actionneur 4 comprend de préférence un arbre d'entrée 13, destiné à être accouplé à une colonne de direction 12 portant un volant de conduite 11, et qui s'étend selon un axe directeur (XX').

De préférence, tel que cela est visible sur la figure 12, le sous-ensemble actionneur 4 comprend également un arbre de sortie 71, de préférence sensiblement coaxial à l'arbre d'entrée 13, et sur lequel est monté, en tant qu'organe d'entraînement 6, un pignon d'entraînement destiné à engrener sur une portion dentée de la crémaillère 3.

De préférence, le sous-ensemble actionneur 4 comprend en outre un réducteur 14 à engrenage, tel qu'un réducteur à roue tangente et vis sans fin, qui permet au moteur d'assistance 5 de venir en prise sur l'arbre de sortie 71.

De préférence, le sous-ensemble actionneur 4 comprend également, tel que cela est notamment visible sur les figures 1 et 12, un capteur de couple conducteur 72 destiné à mesurer le couple dit « couple conducteur » exercé par le conducteur sur le volant de conduite 11 et la colonne de direction 12.

De préférence, ledit capteur de couple conducteur 72 comprend à cet effet une barre de torsion élastiquement déformable, qui est interposée entre l'arbre d'entrée 13 et l'arbre de sortie 71 de sorte à pouvoir mesurer le couple conducteur tel qu'il s'exerce entre l'arbre d'entrée et l'arbre de sortie.

De préférence, tel que cela est notamment détaillé sur les figures 2, 7, 8 et 12, la structure porteuse 10 comprend alors une pluralité de carters 81, 82, 83, initialement distincts, qui sont accolés et fixés les uns aux autres selon un empilement qui suit sensiblement l'axe directeur (XX').

Parmi ces carters, on trouve (au moins) un carter de direction 81, qui accueille et guide le pignon d'entraînement 6 et la crémaillère 3, un carter de réducteur 82, superposé axialement au carter de direction 81, qui porte le moteur d'assistance 5 et dans lequel est logé le réducteur 14 à engrenage, puis, de préférence, un carter de capteur 83, préférentiellement superposé axialement au carter de réducteur 82, et qui accueille le capteur de couple conducteur 72.

De préférence, lesdits carters 81, 82, 83 sont métalliques, et par exemple réalisés en acier ou en alliage léger, de type alliage d'aluminium ou alliage de magnésium.

Avantageusement, une structure porteuse 10 obtenue par empilement de carters 81, 82, 83 permet de subdiviser axialement, le long de l'axe directeur (XX'), ladite structure porteuse 10 en différents étages fonctionnels, associés chacun à un carter 81, 82, 83 distinct, et donc affectés chacun à une fonction distincte qui est complémentaire des fonctions affectées aux autres étages (c'est-à-dire complémentaire des fonctions affectées aux, et réalisées au sein des, autres carters).

Une telle structure porteuse 10 modulaire, obtenue par empilement, facilite la fabrication et le contrôle séparé des différents carters 81, 82, 83, ainsi que l'assemblage de la structure porteuse 10, et plus globalement l'assemblage du sous-ensemble actionneur 4, tout en permettant de conserver la robustesse, la rigidité et la compacité, notamment la compacité axiale, de ladite structure porteuse 10.

Bien entendu, les carters 81, 82, 83 qui sont traversés (chacun) successivement par l'arbre d'entrée 13 puis par l'arbre de sortie 71 comprendront des paliers 85, 86, de type roulements à billes 85 ou roulements à aiguilles 86, nécessaires au guidage rotatif desdits arbres d'entrée 13 et de sortie 71 au sein desdits carters 81, 82, 83, ainsi que, plus généralement, tout autre palier utile au guidage des éléments mobiles contenus dans lesdits carters 81, 82, 83 ou traversant ces derniers.

Ainsi, le carter de direction 81, traversé de part en part par la crémaillère 3, tel que cela est notamment illustré sur la figure 18, formera avantageusement un premier palier de guidage en translation, situé ici dans la moitié gauche de la longueur de la crémaillère 3, qui guide ladite crémaillère 3 en translation, par exemple par une liaison de type pivot-glissant obtenue au moyen d'un ou plusieurs guides 87 de type paliers lisses ou vis à recirculation de billes, fixé(s) dans ledit carter de direction 81 et recevant la crémaillère 3. Dans ce qui suit, on pourra assimiler, par commodité de description, ledit ou lesdits guides 87 audit premier palier de guidage en translation.

Plus globalement, on notera que ledit carter de direction 81 formera un support de renvoi d'angle guidant à la fois l'arbre de sortie 13 et son pignon 6 selon l'axe directeur (XX'), et la crémaillère 3 selon son axe de translation (YY') sécant audit axe directeur (XX').

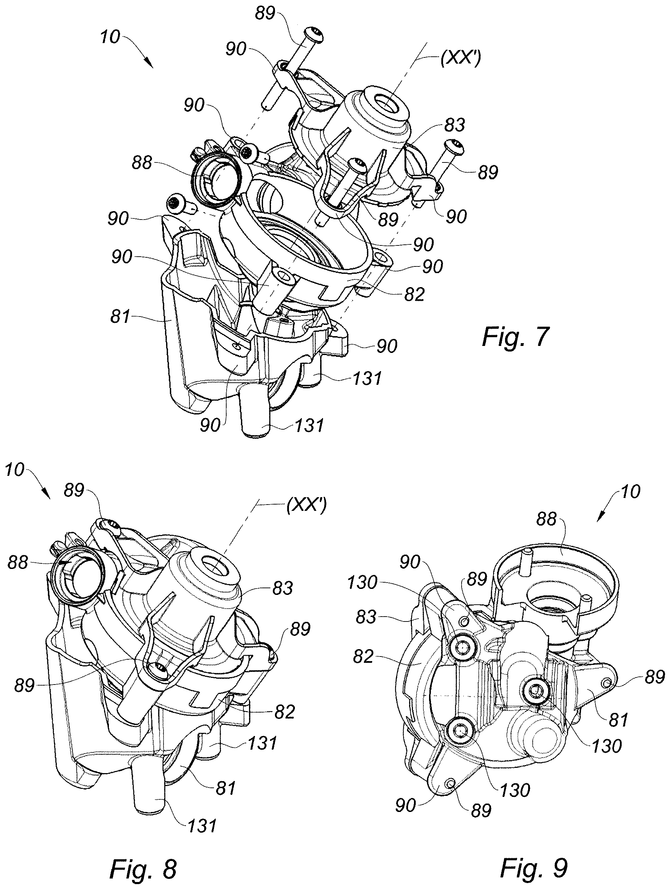

De même, le carter de réducteur 82 pourra comprendre d'une part un palier 85 de type roulement à billes supportant l'arbre de sortie 71, et donc la roue tangente du réducteur 14 fixée sur ledit arbre de sortie 71, et d'autre part, tel que cela est notamment visible sur les figures 2 et 9, un (ou des) palier 88 d'accouplement au moteur d'assistance 5 permettant de fixer le moteur d'assistance 5 sur ledit carter de réducteur et de guider la vis sans fin qui est entraînée par ledit moteur d'assistance et qui vient en prise sur la roue tangente du réducteur.

De préférence, chacun des carters de direction 81, de réducteur 82, et de capteur de couple 83 sera formé d'un seul tenant.

En outre, lesdits carters de direction 81, de réducteur 82 et, le cas échéant, de capteur de couple 83 seront de préférence accolés directement l'un à l'autre au sein de l'empilement, sans interposition axiale d'entretoise ou de carter intermédiaire.

La fabrication et l'assemblage de la structure porteuse 10 sera ainsi simplifiée.

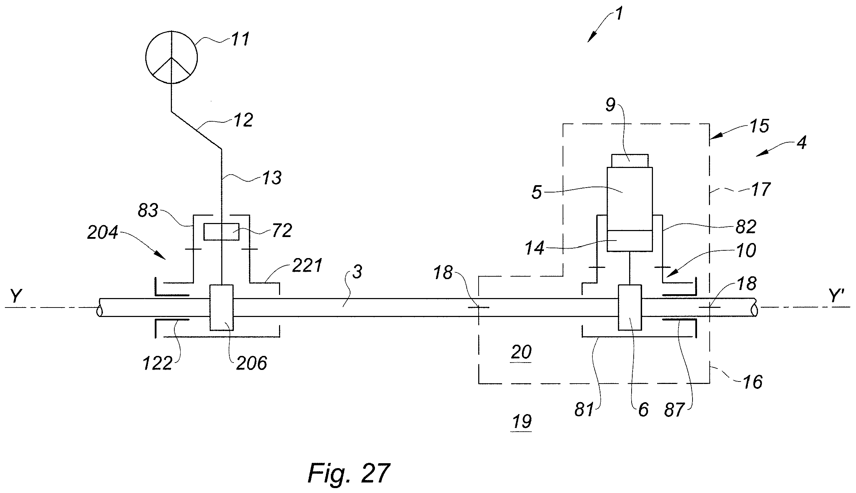

On notera par ailleurs que le principe d'une structure porteuse 10 obtenue par empilement de carters 81, 82, 83 peut, le cas échéant, s'appliquer à un mécanisme « à double pignon », tel que celui illustré sur la figure 27, ou bien encore à un mécanisme d'entraînement à vis à billes.

Selon une telle variante à double pignon (figure 27), on pourra prévoir tout d'abord un sous-ensemble actionneur 4 « motorisé », comprenant, empilés l'un sur l'autre, un carter de réducteur 82 portant le moteur d'assistance 5 et le réducteur 14, et un premier carter de direction 81 guidant la crémaillère 3 ainsi que le pignon d'entraînement 6 entraîné par le réducteur 14.

Par simple commodité de notation, on pourra considérer que, de manière générale, et quel que soit le type de mécanisme mis en oeuvre (à simple pignon ou à double pignon), l'expression « sous-ensemble actionneur » 4 désigne un sous-ensemble actionneur motorisé, c'est-à-dire embarquant le moteur d'assistance 5.

Le sous-ensemble actionneur motorisé 4 sera avantageusement logé dans la coque 15, à l'intérieur de l'enceinte 20.

Selon cette même variante à double pignon, on pourra prévoir ensuite un sous-ensemble actionneur « manuel » 204, qui pourra être ou non également logé dans la coque de confinement 15 (dans la même enceinte 20 que le sous-ensemble actionneur 4 motorisé), ledit sous-ensemble actionneur 204 manuel comprenant au moins un second carter de direction 221 qui d'une part guide la colonne de direction 12 sur laquelle est fixé le volant de conduite 11, et qui d'autre part guide également la crémaillère 3 sur laquelle ladite colonne de direction 12 engrène au moyen du pignon auxiliaire 206.

Le sous-ensemble actionneur manuel 204 est de préférence, et contrairement au sous-ensemble actionneur motorisé 4, dépourvu de moteur d'assistance 5 capable d'agir sur la crémaillère 3, de manière à simplement permettre la transmission mécanique à la crémaillère 3, par l'intermédiaire de la colonne de direction 12, de l'effort manuel exercé par le conducteur sur le volant 11 de conduite.

De préférence, le sous-ensemble actionneur manuel 204 comprendra, empilés l'un sur l'autre, d'une part ledit second carter de direction 221 qui guide la colonne de direction 12 (et plus particulièrement le pignon auxiliaire 206) et la crémaillère 3, et d'autre part un carter de capteur de couple 83.

Selon une première sous-variante de réalisation de cette variante à double pignon, on pourra choisir de ne protéger, par une coque 15 selon l'invention, que le sous-ensemble actionneur motorisé 4, tandis que le sous-ensemble actionneur manuel 204 (avec son second carter de direction 221, et, le cas échéant, avec son carter de capteur de couple 83) sera situé en-dehors de la coque 15, à l'extérieur de l'enceinte 20, tel que cela est illustré sur la figure 27.

Le sous-ensemble actionneur manuel 204 pourra alors disposer de ses moyens d'étanchéité propres, distincts de la coque 15.

Selon une seconde sous-variante de réalisation de cette variante à double pignon, le sous-ensemble actionneur manuel 204 comprendra, empilés l'un sur l'autre, d'une part le second carter de direction 221 qui guide la colonne de direction 12 et la crémaillère 3, et d'autre part le carter de capteur de couple 83, et ledit sous-ensemble actionneur manuel 204 sera (intégralement) logé dans la coque de confinement 15, dans la même enceinte 20 que le sous-ensemble actionneur 4 motorisé.

Bien entendu, l'agencement d'un mécanisme à vis à billes selon l'invention peut se déduire *mutatis mutandis* du descriptif du mécanisme à double pignon, présenté ci-dessus en référence à la figure 27, simplement en remplaçant le pignon d'entraînement 6, voire l'ensemble pignon d'entraînement 6 / réducteur 14, par une vis à billes engagée sur la crémaillère 3.

Par ailleurs, bien que le principe constructif d'une structure porteuse 10 obtenue par empilement de carters soit adapté notamment à un mécanisme de direction assistée à double pignon, un tel principe constructif sera de préférence bien adapté à, et préférentiellement mis en oeuvre dans, un mécanisme à « simple pignon », tel qu'illustré sur les figures 1, 4, 12 et 18.

En effet, l'empilement, au sein d'une même structure porteuse 10, d'un carter de direction 81, d'un carter de réducteur 82 et d'un carter de capteur de couple 83 permet avantageusement de réunir, de façon particulièrement compacte et peu onéreuse à fabriquer, toutes les fonctions utiles (guidage de crémaillère, transmission d'effort de la colonne de direction 12 à la crémaillère 3, assistance motorisée, et mesure de couple conducteur) dans un même sous-ensemble actionneur 4 unique.

On notera que, quel que soit le type de mécanisme de direction utilisé (et notamment que l'on utilise un mécanisme à simple pignon, un mécanisme à double pignon, ou un mécanisme à vis à billes), les carters 81, 82, 83 empilés, et/ou les ramifications correspondantes de la structure porteuse 10, seront de préférence tous placés à l'abri à l'intérieur de la coque de confinement 15, c'est-à-dire confinés dans l'enceinte 20, si bien qu'il ne sera pas nécessaire de prévoir des éléments d'étanchéité supplémentaires au sein de la structure porteuse 10 elle-même pour protéger de l'humidité et de la corrosion lesdits carters 81, 82, 83 ou les organes (pièces mobiles, paliers, etc.) placé à l'intérieur desdits carters.

Ainsi, de préférence, et quel que soit par ailleurs le nombre (égal ou supérieur à deux) de carters 81, 82, 83 empilés et solidarisés les uns aux autres pour former l'empilement propre à la structure porteuse 10 du sous-ensemble actionneur 4 considéré, l'empilement de carters 81, 82, 83 de la structure porteuse 10 est réalisé sans interposer, entre les différents carters 81, 82, 83 adjacents qui forment ledit empilement, de joints d'étanchéité rapportés, et notamment sans interposer de joints en élastomère entre carters adjacents appartenant audit empilement.

En d'autre termes, au sein de l'empilement formant la structure porteuse, chaque jonction entre deux carters adjacents, et plus particulièrement la première jonction entre le carter de direction 81 et le carter de réducteur 82, ainsi que la seconde jonction entre le carter de réducteur 82 et le carter de capteur de couple 83 (seconde jonction qui est distincte de la première jonction et distante axialement de ladite première jonction, le long de l'axe directeur (XX') de l'arbre d'entrée 13), sont dépourvues de joints d'étanchéité, et notamment de joints en élastomère.

Les carters adjacents sont donc accolés directement l'un à l'autre, selon un contact métal/métal.

Avantageusement, puisque la fonction d'étanchéité est assumée par la coque de confinement 15 qui enveloppe la structure porteuse 10 dans son intégralité, il n'est pas nécessaire de créer une étanchéité locale entre les carters 81, 82, 83 constitutifs de ladite structure porteuse 10.

De ce fait, l'invention permet de faire l'économie de joints, ce qui réduit le coût de réalisation et simplifie l'assemblage de la structure porteuse 10, et donc plus globalement du sous-ensemble actionneur 4 et du dispositif de direction 1, puisqu'il n'y a notamment plus de risque de mal positionner ou d'endommager un joint lors de l'assemblage des carters 81, 82, 83.

De préférence, tel que cela est illustré sur les figures 2, 7 et 8, le carter de direction 81, le carter de réducteur 82 et le carter de capteur de couple 83 sont maintenus les uns aux autres au moyen d'au moins une vis d'assemblage 89, et de préférence d'une pluralité de vis d'assemblage 89 (ici trois vis d'assemblage), ladite vis d'assemblage, ou chacune desdites vis d'assemblage 89, étant commune aux trois carters 81, 82, 83 empilés, et agissant comme un tirant qui tire mutuellement le carter de capteur de couple 83 et le carter de direction 81 l'un vers l'autre, en serrant ainsi le carter de réducteur 82, qui forme ici un carter intermédiaire, entre ledit carter de capteur 83 et ledit carter de direction 81.

De préférence, l'embout fileté de la vis d'assemblage 89 vient s'ancrer dans un filetage du carter de direction 81, carter de direction 81 qui forme une première extrémité axiale, ici inférieure, de l'empilement, et donc de la structure porteuse 10, tandis que la tête de la vis d'assemblage 89 vient en appui contre le carter de capteur de couple 83 qui forme une seconde extrémité axiale, ici supérieure, de l'empilement, et donc de la structure porteuse 10.

De préférence, tel que cela est bien visible sur la figure 7, les carters 81, 82, 83 présenteront des pattes 90 disposées sensiblement en étoile autour de l'axe directeur (XX'), à la périphérie desdits carters 81, 82, 83, et qui permettront le passage et l'ancrage des vis d'assemblage 89.

Les pattes 90 du carter de réducteur 82 formeront de préférence des canons, destinés à être traversés chacun par une vis d'assemblage 89, et dont la hauteur axiale correspondra, pour permettre auxdits canons de remplir également la fonction d'entretoise, à la hauteur dudit carter de réducteur 82 qui sépare axialement les carters de direction 81 et de capteur de couple 83.

Avantageusement, les pattes 90 faciliteront le positionnement des carters 81, 82, 83 lors de l'assemblage, tant axialement le long de l'axe directeur (XX') qu'angulairement autour dudit axe directeur (XX').

Plus globalement, l'assemblage proposé, par vis d'assemblage 89, sera avantageusement peu coûteux, solide et stable.

Des agencements possibles de jonction étanche 18 assurant la fixation étanche de la cloche 17 sur l'embase 16, agencements qui peuvent constituer des inventions à part entière, vont maintenant être décrits plus en détail.

On notera que ladite jonction étanche 18 pourra, dans l'absolu, être réalisée par tout procédé approprié, tel que notamment le collage ou le thermo-soudage.

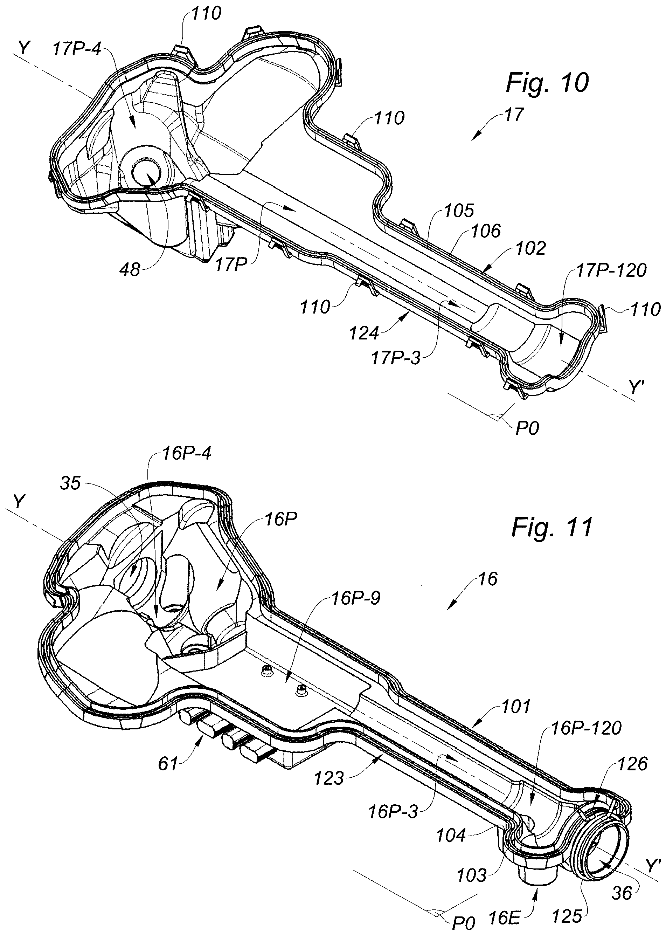

De préférence, tel que cela est notamment visible sur les figures 10, 12, et 16, la cloche 17 présente un rebord périphérique 102 qui épouse, selon un plan de joint P0 de la coque de confinement 15, et en suivant le tracé de la jonction étanche 18, un rebord périphérique 101 correspondant de l'embase 16 (contre lequel le rebord périphérique 102 de la cloche 17 vient en appui).

De préférence, ledit rebord périphérique 102 de la cloche 17 est pourvu d'au moins une nervure d'accroche 105, 106 qui s'étend le long dudit rebord périphérique 102 de la cloche, selon le tracé de la jonction étanche 18 (tracé qui est préférence sensiblement parallèle au bord libre du rebord périphérique 102), et qui fait saillie vers l'embase 16 par rapport au plan de joint P0 (ce qui permet à ladite nervure d'accroche 105, 106 de traverser le plan de joint P0 pour pénétrer du côté de l'embase 16, à la manière d'un tenon).

De préférence, le rebord périphérique 101 de l'embase 16 est quant à lui pourvu d'au moins une rainure de collage 103, 104 qui est agencée en creux par rapport au plan de joint P0 de manière à recevoir d'une part la nervure d'accroche 105, 106 et d'autre part un matériau de collage 107, tel qu'une résine polymérisable, qui assure la fixation étanche, par collage, de la nervure d'accroche 105, 106 dans la rainure de collage 103, 104, de sorte à former par collage une jonction étanche 18 entre la cloche 17 et l'embase 16, tel que cela est illustré sur la figure 16.

La rainure de collage 103, 104 forme ainsi une sorte de mortaise (organe femelle de la jonction étanche 18) de forme sensiblement conjuguée à celle du tenon (organe mâle de la jonction étanche 18) que forme la nervure d'accroche 105, 106 correspondante qui pénètre dans ladite rainure de collage 103, 104.

Avantageusement, l'utilisation d'un emboîtement périphérique par nervure d'accroche 105, 106 et rainure de collage 103, 104 simplifie le centrage de la cloche 17 sur l'embase 16, bloque efficacement la cloche 17 par rapport à l'embase 16 dans toutes les directions parallèles au plan de joint (c'est-à-dire dans toutes les directions latérales, transverses à l'axe directeur (XX') ou transverses à la direction d'approche DA), procure une surface de collage très étendue (notamment selon la hauteur commune à la nervure d'accroche 105, 106 et à la rainure de collage 103, 104), ce qui optimise la résistance mécanique à l'arrachement de la jonction étanche 18, et enfin améliore l'étanchéité en créant des chicanes, d'autant que lesdites chicanes sont avantageusement remplies du matériau de collage 107 étanche.

Selon une variante de réalisation particulièrement préférentielle, le rebord périphérique 102 de la cloche 17 comporte, tel que cela est visible sur les figures 10 et 16, deux nervures d'accroche 105, 106 sensiblement parallèles entre elles, qui s'étendent le long dudit rebord périphérique 102 de la cloche 17, un peu à la manière de rails, selon le tracé de la jonction étanche 18, et qui font saillie par rapport au plan de joint P0.

La première nervure d'accroche 105 sera de préférence interne, c'est-à-dire située du côté de l'enceinte 20, de sorte que le tracé de ladite première nervure d'accroche 105 sera contenu à l'intérieur du tracé de la seconde nervure d'accroche 106, qui est quant à elle plus éloignée de l'enceinte 20 et plus proche du bord libre (externe) du rebord périphérique 102.

Le rebord périphérique 101 de l'embase 16 est alors avantageusement pourvu, tel que cela est illustré sur les figures 5, 6, 16, 19, 21, 23 et 25, de deux rainures de collage 103, 104 sensiblement parallèles entre elles, dont les formes respectives sont sensiblement conjuguées aux formes des deux nervures d'accroche 105, 106 de la cloche 17, lesdites rainures de collage 103, 104 étant agencées en creux par rapport au plan de joint P0 de manière à ce que chaque rainure de collage 103, 104 de l'embase 16 reçoive l'une des deux nervures d'accroche 105, 106 de la cloche 17, ainsi qu'un matériau de collage 107, qui assure la fixation étanche, par collage, de chaque nervure d'accroche dans la rainure de collage qui lui correspond, de sorte à former par collage une jonction étanche 18 (double) entre la cloche 17 et l'embase 16.

Avantageusement, le doublement des nervures d'accroche 105, 106 et des rainures de collages 103, 104 augmente l'étendue des surfaces de collage, et donc améliore l'adhésion de la cloche 17 sur l'embase 16 ainsi que l'étanchéité de la jonction 18 étanche.

L'agencement rainuré du rebord périphérique 101 de l'embase 16, respectivement l'agencement nervuré du rebord périphérique 102, qui permet aux rebords périphériques 101, 102 de former des bords tombés, sécants et de préférence sensiblement perpendiculaires au plan de joint P0 (c'est-à-dire, ici, sensiblement verticaux), contribue en outre à rigidifier l'embase 16, respectivement la cloche 17, ce qui facilite la manipulation des l'embase 16 et de la cloche 17 lors des opérations d'assemblage.

De façon particulièrement préférentielle, la ou les nervures d'accroche 105, 106, respectivement la ou les rainures de collage 103, 104, suivent chacune un tracé continu, c'est-à-dire ininterrompu, tout autour de leur rebord périphérique 102, 101 respectif, de sorte à former chacune un contour fermé sur lui-même, qui s'étend sur 360 degrés autour de l'axe directeur (XX'), sur tout le périmètre de la cloche 17, respectivement surtout le périmètre de l'embase 16.

Ainsi, la jonction étanche 18 pourra border en continu le plan de joint P0 sur tout le périmètre de la portion de la coque 15 qui est formée par la réunion de la cloche 17 et de l'embase 16, et ce y compris dans les portions qui franchissent (croisent) l'axe longitudinal de la crémaillère (YY').

Ici encore, la capacité de centrage, la résistance mécanique de la jonction étanche 18, et l'étanchéité de la coque 15 s'en verront améliorées.

Par commodité de fabrication, la ou les rainures de collage 103, 104, ainsi que la ou les nervures d'accroche 105, 106 correspondantes pourront avantageusement présenter des sections droites sensiblement en forme de U, tel que cela est illustré sur la figure 16.

Le cas échéant, on pourra prévoir également des angles de dépouille, aussi bien au niveau des rainures de collage 103,104/nervures d'accroche 105, 106 que, plus globalement, dans les empreintes 16P, 17P de l'embase et de la cloche, pour permettre une fabrication de la cloche 17, respectivement de l'embase 16, par moulage depuis le plan de joint P0.

A titre indicatif, la profondeur (verticale) H₁₀₃ des rainures de collage 103, 104, de même que la hauteur saillante de nervures d'accroche 105, 106, sera sensiblement comprise entre 2 mm et 10 mm.

L'épaisseur (latérale) L₁₀₅ des nervures d'accroche 105, 106, de même que la largeur (latérale) L₁₀₃ des rainures de collage 103, 104, pourra être comprise entre 1,5 mm et 3 mm.

Bien entendu, tel que cela est visible sur la figure 16, un jeu latéral J_{L}, et de préférence un jeu vertical J_{V}, sera prévu entre les faces des nervures d'accroche 105, 106 et les faces correspondantes des rainures de collage 103, 104, pour permettre au matériau de collage 107 de s'insinuer entre lesdites faces, afin de remplir les rainures de collage 103, 104 et de mouiller les nervures d'accroche 105, 106.

A ce titre, le jeu latéral J_{L}, c'est-à-dire la différence entre la largeur L₁₀₃ des rainures de collage 103, 104 et l'épaisseur L₁₀₅ des nervures d'accroche 105, 106 pourra être sensiblement compris entre 0,1 mm et 1 mm.

Le jeu vertical J_{V} offrant un passage au matériau de collage au fond des rainures de collage 103, 104 pourra, de même, être compris entre 0,5 mm et 2 mm.

De préférence, le volume résiduel de la, ou respectivement des rainures de collage, qui subsiste à l'intérieur desdites rainures de collage 103, 104 lorsque la, respectivement les, nervures d'accroche 105, 106 ont pénétré dans lesdites rainures de collage 103, 104 et se trouvent en place dans ces dernières, est supérieur au volume du matériau de collage 107 introduit dans cette même rainure de collage 103, 104, respectivement dans ces mêmes rainures de collage 103, 104, pour réaliser la jonction entre la cloche 17 et l'embase 16, de telle sorte que les parois latérales qui bordent lesdites rainures de collage 103, 104 forment des parois anti-débordement 108, 109 capables de contenir ledit matériau de collage 107 à l'intérieur de ladite rainure de collage 103, 104, respectivement desdites rainures de collage 103, 104, lors de la mise en place de la cloche 17 sur l'embase 16, tel que cela est illustré sur la figure 16.

Avantageusement, le matériau de collage 107 reste ainsi confiné dans les rainures de collage 103, 104, sans déborder desdites rainures de collage 103, 104, lorsque ledit matériau de collage 107 est en partie chassé par les nervures d'accroche 105, 106 qui le repoussent au fur et à mesure qu'elles pénètrent dans lesdites rainures de collage 103, 104.

Un tel agencement permet avantageusement d'obtenir, de façon reproductible, avec un dosage de matériau de collage 107 déterminé une fois pour toute, une bonne répartition du matériau de collage, et un assemblage homogène et net, sans coulure ni défaut d'assiette (d'inclinaison) de la cloche 17 par rapport à l'embase 16.

Par ailleurs, selon une variante possible de réalisation, le rebord périphérique 102 de la cloche 17 et/ou le rebord périphérique 101 de l'embase 16 comprend au moins une, et de préférence plusieurs, languettes d'encliquetage 110, conçues pour venir en prise sur l'embase 16, et/ou respectivement sur la cloche 17, lorsque l'on referme la cloche 17 sur l'embase 16, de manière à maintenir la cloche 17 plaquée contre l'embase 16.

Les languettes d'encliquetage 110, élastiquement flexibles, et qui pourront être avantageusement réparties sur tout le pourtour du rebord périphérique 102 de la cloche 17, permettront avantageusement de clipper la cloche 17 sur l'embase 16.

Un tel clippage offrira avantageusement un maintien mécanique stable de la cloche 17 sur l'embase 16 pendant polymérisation du matériau de collage 107, et renforcera en outre, en complément du collage, la résistance globale de la coque 15 en s'opposant à la séparation de la cloche 17 et de l'embase 16 le long du plan de joint P0.

De préférence, tant par commodité de fabrication de l'embase 16 que par commodité d'assemblage par clippage (notamment pour simplifier le centrage de la cloche 17 sur l'embase 16), toutes les languettes d'encliquetage 110 seront portées par la cloche 17.

De façon préférentielle, la ou les languettes d'encliquetage 110 sont formées d'un seul tenant avec la cloche 17 (en matériau polymère), et prolongent le rebord périphérique 102 de ladite cloche 17 en débord externe des nervures d'accroche 105, 106, lesdites languettes d'encliquetage 110 étant pourvues, de préférence sensiblement à leur extrémité libre, d'un crochet 111 agencé pour venir en prise contre le rebord de l'embase, en débord externe des rainures de collage 103, 104, et plus particulièrement en débord externe des parois anti-débordement 108, 109 desdites rainures de collage 103, 104.

Tel que cela est illustré sur la figure 16, le crochet 111 pourra comporter une rampe 112 qui force l'écartement latéral dudit crochet 111, par flexion élastique de la languette 110, lors de l'enfoncement (selon la direction d'approche DA) de la cloche 17 sur l'embase 16, puis une face d'arrêt 113 qui vient en prise anti-retour contre un épaulement 114 ménagé dans (sous) le rebord périphérique 101 de l'embase 16, par déflexion (retour élastique) de la languette 110 une fois que le crochet 111 a franchi ledit épaulement 114.

Les languettes d'encliquetage 110 pourront quant à elle être formées par des triangles évidés, tel que cela est visible sur les figures 14 et 16, qui conjuguent ainsi bonne souplesse et grande solidité, notamment à la traction.

Le déport latéral externe, qui permet notamment à la languette 110, issue de la cloche 17, d'être rabattue par-dessus la face externe libre de la paroi anti-débordement 109 de l'embase 16, et de traverser le plan de joint P0 pour rejoindre l'épaulement 114 ménagé dans l'embase 16, pourra être obtenu par un profil sensiblement en L, tel que cela est visible sur la figure 16.

Avantageusement, la disposition externe des languettes d'encliquetage 110 sur une surface apparente de la cloche 17, hors de l'enceinte 20 et au-delà de la zone de jonction étanche entre nervures d'accroche 105, 106 et rainures de collage 103, 104, permet de contrôler visuellement le bon placement et le bon encliquetage desdites languettes 110 lors de la mise en place de la cloche 17 sur l'embase 16, et évite de surcroît toute interférence dommageable desdites languettes 110 avec la zone de collage.

Par ailleurs, tel que cela est notamment illustré sur les figures 3, 4, 5, 18, 20, 22 et 26, le dispositif 1 de direction comprend de préférence un palier de guidage satellite 120, distinct de la structure porteuse 10, ledit palier de guidage satellite 120 (ci-après « palier satellite ») étant disposé à distance de la structure porteuse 10 et agencé pour guider la crémaillère 3 en translation par rapport à ladite coque de confinement 15.

Ainsi, tel que cela est notamment visible sur la figure 18, la crémaillère 3 est portée et guidée en translation T3, de façon stable, d'une part, dans sa première moitié (considérée en longueur, le long de l'axe (YY')), ici la moitié gauche, par un premier guide 87, formé au sein du carter de direction 81, et dans sa seconde moitié, ici la moitié droite, par un second guide 122, par exemple un palier lisse ou une vis à recirculation de billes, présent dans le palier satellite 120.

A cet effet, ledit palier satellite 120 (et plus particulièrement le second guide 122) est placé dans l'alignement du premier guide 87, selon l'axe longitudinal de la crémaillère (YY'), et offre ainsi une portée supplémentaire à la crémaillère 3, à distance de la structure porteuse 10, portée supplémentaire qui complète l'action du premier guide 87 et améliore donc ainsi la précision et la qualité globale du guidage en translation.

De préférence, le palier de guidage satellite 120 est, de même que la structure porteuse 10, disposé à l'intérieur de la coque de confinement 15, dans l'enceinte 20.

De la sorte, bien que le palier satellite 120 soit distinct et distant de la structure porteuse 10 du sous-ensemble d'actionnement 4, ledit palier satellite 120 est également porté par l'embase 16, et protégé (de la poussière, de l'eau, du brouillard salin et le cas échéant d'autres corps étrangers) par la coque de confinement 15, dont il partage alors avantageusement l'enceinte 20 avec ledit sous-ensemble d'actionnement 4.

Structurellement, de même que la structure porteuse 10 comprend un premier carter de direction 81 recevant le premier guide 87 qui assure le guidage en translation de la moitié gauche de la crémaillère 3, le palier de guidage satellite 120 peut avantageusement comporter un second carter de direction 121, de préférence formé d'un seul tenant, et préférentiellement dans un matériau métallique (tel qu'un acier ou un alliage d'aluminium ou de magnésium), ledit second carter de direction 121 contenant le second guide 122, de type palier lisse ou vis à recirculation de billes, fixé dans ledit second carter de direction 121 et assurant le guidage de la moitié droite de la crémaillère 3.

Le soufflet droit 34 pourra avantageusement masquer l'orifice d'accès 36 audit palier de guidage satellite 120 (et au second guide 122).

On notera que, dans le cas d'un mécanisme « à double pignon » (ou d'un mécanisme à vis à billes) tel que décrit plus haut et illustré sur la figure 27, la crémaillère 3 est guidée d'une part, sur un premier tronçon de crémaillère, par un premier carter de direction 81 appartenant au sous-ensemble actionneur motorisé 4, et d'autre part, sur un second tronçon de crémaillère distinct et axialement distant du premier tronçon de crémaillère, par un second carter de direction 221 qui appartient au sous-ensemble actionneur manuel 204, lui-même distinct et distant du sous-ensemble actionneur motorisé 4.

Dans une telle configuration, c'est donc le sous-ensemble actionneur manuel 204 qui remplira, en pratique, le rôle de palier de guidage satellite par rapport au sous-ensemble actionneur motorisé 4 (et réciproquement).

Plus particulièrement, on pourra donc considérer que c'est le sous-ensemble actionneur motorisé 4 (portant le moteur d'assistance 5) qui offre le premier guide 87 en translation, porté par le premier carter de direction 81 intégré audit sous-ensemble actionneur motorisé 4, tandis que le sous-ensemble actionneur manuel 204 offre le second guide 122, porté par le second carter de direction 221 intégré audit sous-ensemble actionneur manuel 204.

On notera que, par rapport à un mécanisme à simple pignon, au sein duquel le second carter de direction 121 assure simplement le guidage "passif" de la crémaillère 3, le mécanisme à double pignon (ou à vis à billes) utilisera un second carter de direction 221 « amélioré », agencé pour assurer non seulement le guidage en translation de la crémaillère 3, dans le second guide 122, mais également, en sus, le guidage de la colonne de direction 12, de manière à ce que ladite colonne de direction, contrôlée par le volant de conduite 11, vienne en prise directe, par son pignon auxiliaire 206, sur la crémaillère 3, au sein dudit sous-ensemble actionneur manuel 204.

Comme cela a été dit plus haut, dans le cas d'un mécanisme « à double pignon » (ou d'un mécanisme à vis à billes), le sous-ensemble actionneur manuel 204 pourra être soit placé à l'intérieur de la coque 15, dans la même enceinte 20 que le sous-ensemble actionneur motorisé 4, soit, sans sortir du cadre de l'invention, à l'extérieur de la coque 15, en dehors de l'enceinte 20. Dans tous les cas, le sous-ensemble actionneur motorisé 4 se trouvera protégé à l'intérieur de la coque 15.

Selon une première possibilité de réalisation, illustrée notamment sur les figures 5, 6, 14, 18, le palier de guidage satellite 120 est, de même que le sous-ensemble actionneur 4, recouvert pour partie par l'embase 16 (sur le dessous du palier 120) et pour (l'autre) partie par la cloche 17 (sur le dessus dudit palier 120).

A cet effet, tel que cela est illustré sur la figure 11, l'empreinte en creux 16P de l'embase 16 présentera un emplacement 16P-120 ouvert sur le plan de joint P0 et spécifiquement conformé pour accueillir le palier de guidage satellite 120.

Ledit emplacement 16P-120 présentera de préférence une forme sensiblement conjuguée au second carter de direction 121.

De même, tel que cela est illustré sur la figure 10, la cloche 17 présentera de préférence une empreinte en creux 17P pourvue d'un emplacement 17P-120 (complémentaire à l'emplacement 16P-120), ouvert sur le plan de joint P0, et destiné à recouvrir le palier de guidage satellite 120.

On notera par ailleurs que, de préférence, selon cette première possibilité de réalisation, et tel que cela est illustré sur les figures 5 et 11, l'embase 16, et plus particulièrement son empreinte 16P, pourra présenter une portion formant gouttière 123 qui relie (d'un seul tenant) l'emplacement 16P-4 du sous-ensemble actionneur 4 à l'emplacement 16P-120 du palier de guidage satellite 120, et qui délimite un emplacement 16P-3 pour crémaillère 3, ouvert sur le plan de joint P0 (et qui est donc accessible par le plan de joint P0 tant que l'embase 16 n'est pas recouverte par la cloche 17), et destiné à recevoir, recouvrir, protéger, et permettre le passage de, la portion de crémaillère 3 (en l'espèce de la portion de crémaillère nue, c'est-à-dire non recouverte par un carter de direction 81, 121) qui est comprise entre le sous-ensemble actionneur 4 (la sortie du sous-ensemble actionneur 4) et le palier de guidage satellite 120.

Au sein de l'embase 16, l'emplacement 16P-3 pour crémaillère 3 présentera de préférence une forme hémi-cylindrique, de préférence de section semi-circulaire, et axée sur l'axe longitudinal (YY').

De manière analogue, la cloche 17, et plus particulièrement son empreinte 17P, qui comportera un emplacement 17P-4 destiné à couvrir le sous-ensemble actionneur 4, pourra présenter une portion formant gouttière 124 qui relie (d'un seul tenant) l'emplacement 17P-4 destiné à couvrir le sous-ensemble actionneur 4 à l'emplacement 17P-120 destiné à couvrir le palier de guidage satellite 120, et qui délimite un emplacement 17P-3 pour crémaillère 3, ouvert sur le plan de joint P0, et destiné à recevoir, recouvrir, protéger, et permettre le passage de, la portion de crémaillère 3 (nue, c'est-à-dire non recouverte par un carter de direction 81, 121) qui est comprise entre le sous-ensemble actionneur 4 (la sortie du sous-ensemble actionneur 4) et le palier de guidage satellite 120.

Ici encore, au sein de la cloche 17, l'emplacement 17P-3 pour crémaillère 3 présentera de préférence une forme hémi-cylindrique, de préférence de section semi-circulaire, et axée sur l'axe longitudinal (YY').

On notera par ailleurs que, tel que cela est illustré sur la figure 11, l'extrémité longitudinale de l'embase 16, qui délimite (à droite) l'orifice d'accès 36 (droit) au palier de guidage satellite 120, pourra former, d'un seul tenant avec l'embase 16, une bague terminale 125, de contour annulaire fermé centré sur l'axe longitudinal (YY').

Outre qu'elle améliore la rigidité de l'embase 16, une telle bague terminale 125, destinée à être traversée par la crémaillère 3, forme un pont 126 qui croise et enjambe l'axe longitudinal 3, par-dessus la crémaillère 3, et permet ainsi une continuité de la jonction étanche 18, et plus particulièrement une continuité de l'accouplement par nervures d'accroche 105, 106 et rainures de collage 103, 104 tel que décrit plus haut.

On notera également que, selon la première possibilité de réalisation, illustrée notamment sur les figures 5, 6, 10, 11, 14, 18, l'embase 16 et la cloche 17 couvrent de préférence chacune, d'un seul tenant, le long de l'axe longitudinal (YY'), et chacune d'un côte différent du plan de joint P0 qui est sensiblement parallèle audit axe longitudinal (YY'), au moins 50 % de la longueur L3 de la crémaillère 3 (L3 représentant la longueur totale de la crémaillère, considérée de l'extrémité gauche 3G à l'extrémité droite 3D), et de préférence au moins 75 % voire environ 80 % à 90 % de ladite longueur L3 de la crémaillère 3.

Selon cette première possibilité de réalisation, la cloche 17 couvre en outre de préférence sensiblement la même portion de longueur L3 de la crémaillère 3 que l'embase 16, la cloche 17 recouvrant ainsi la totalité de l'empreinte 16P de l'embase 16 (et réciproquement, l'embase 16 recouvrant la totalité de l'empreinte 17P de la cloche).

L'invention permet en effet de réaliser facilement, notamment par moulage par injection, des portions de coque (cloche 17 et embase 16) très étendues, offrant une protection ininterrompue sur une grande longueur de la crémaillère 3.

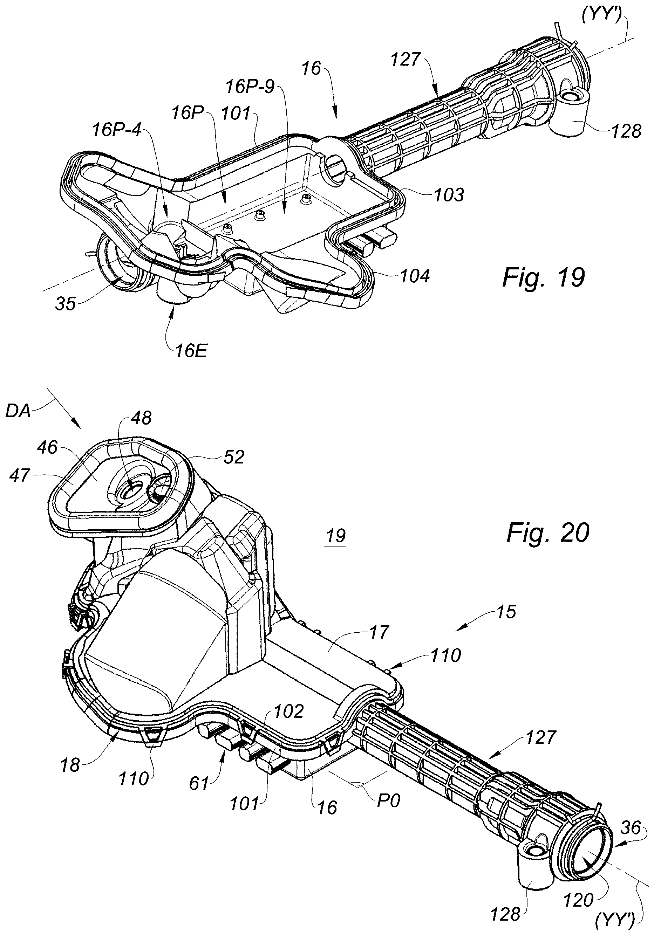

Selon une seconde possibilité de réalisation, commune aux variantes des figures 19 et 20, 21 et 22, et 23 à 26, le palier de guidage satellite 120, et plus particulièrement le second guide 122, est logé (enfilé) dans une extension tubulaire 127, formant un cylindre complet autour de l'axe longitudinal (YY'), et qui, contrairement à l'agencement de la première possibilité de réalisation décrite dans les paragraphes précédents, n'est donc pas ouvert sur le plan de joint P0, y compris lorsque la cloche 17 n'est pas encore rapportée sur l'embase 16.

Ladite extension tubulaire 127 pourra notamment couvrir au moins 20 %, au moins 30 %, et jusqu'à 50 % voire 60 % de la longueur L3 de la crémaillère 3.

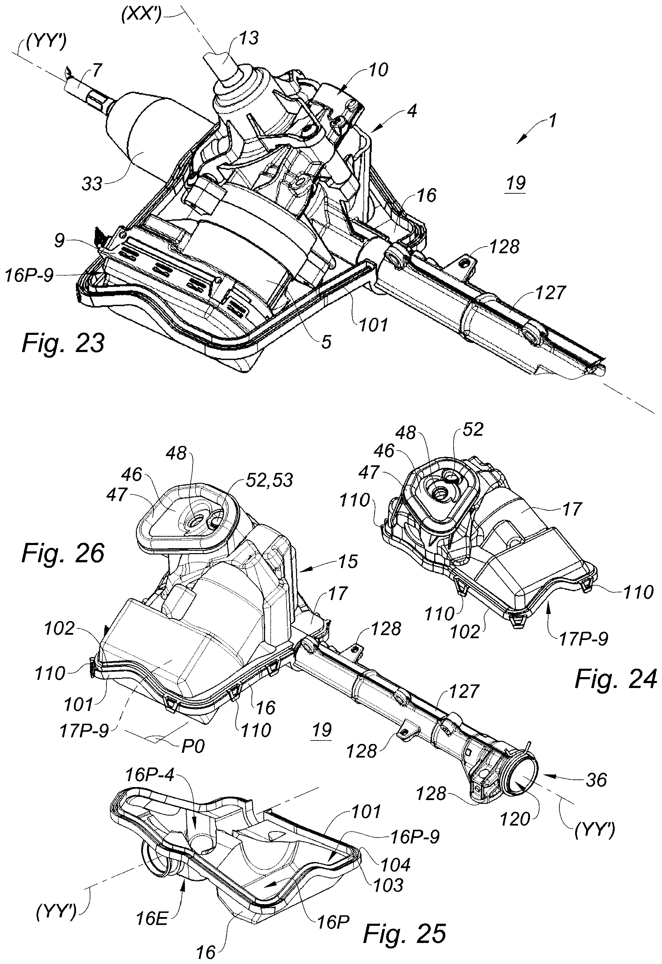

L'utilisation d'une telle extension tubulaire 127 permettra notamment de réduire l'étendue axiale, le long de l'axe longitudinal (YY'), de la cloche 17 (figures 19, 20, 21, 22), voire aussi bien l'étendue axiale de la cloche 17 que l'étendue axiale de l'embase 16 (figures 23 à 26).

A titre indicatif, au sein de la seconde variante des figures 19 et 20, la cloche 17 pourra couvrir entre 25 % et 40 % voire jusqu'à 50 % de la longueur L3 de la crémaillère (c'est-à-dire une longueur moindre qu'au sein de la première variante des figures 13 à 15), et/ou chevaucher et recouvrir ainsi l'embase 16 sur environ 30 % à 50 % voire 60 % de la longueur de ladite embase 16, ladite embase 16 couvrant quant à elle, comme pour la première variante, au moins 50 % de la longueur L3 de la crémaillère 3, et de préférence au moins 75 % voire environ 80 % à 90 % de ladite longueur L3 de la crémaillère 3.

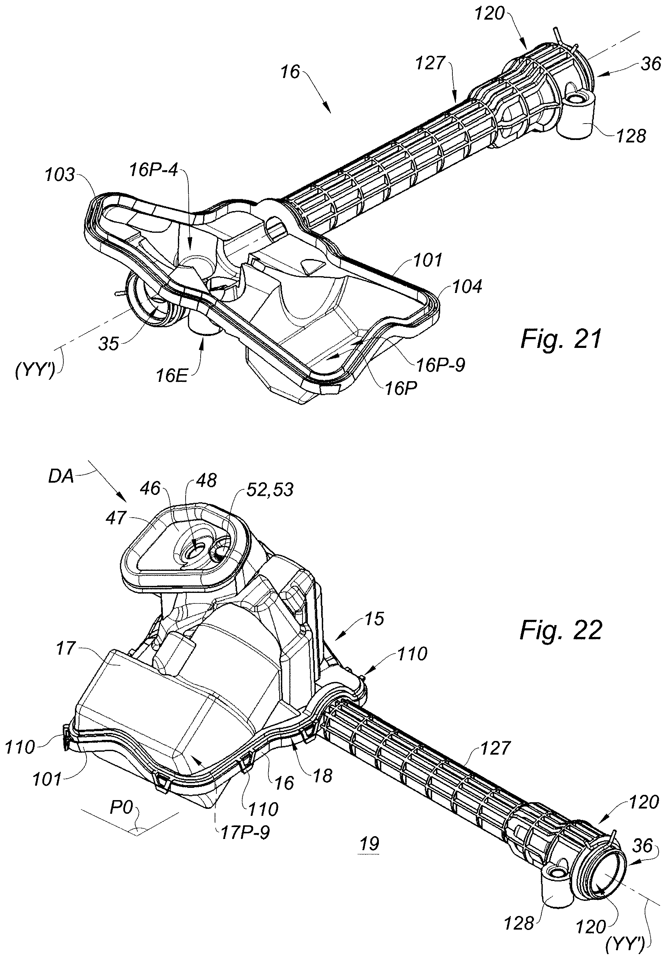

Au sein de la troisième variante des figure 21 et 22, la longueur de la cloche 17, considérée le long de l'axe longitudinal (YY'), c'est-à-dire la longueur de la portion de crémaillère 3 couverte par la cloche 17, pourra être encore davantage réduite par rapport à la longueur de l'embase 16 (c'est-à-dire par rapport à la longueur de la portion de crémaillère 3 couverte par l'embase 16, extension tubulaire 127 comprise), et représenter par exemple 20 % à 30 % voire 40 % de la longueur (totale) de l'embase 16, et/ou entre 15 % et 35 %, et de préférence entre 20 % et 30 % environ de la longueur L3 de la crémaillère 3.

En tout état de cause, l'utilisation d'une extension tubulaire 127 permettra de réduire les dimensions de l'outillage (i.e. du moule) de fabrication de la cloche 17 (typiquement pour les seconde, troisième et quatrième variantes), voire les dimensions de l'outillage (i.e. du moule) de fabrication de l'embase 16 (quatrième variante des figures 23 à 25), et donc les coûts de fabrication du dispositif 1.

En outre, la manipulation de la cloche 17 et le centrage de ladite cloche 17 sur l'embase 16 seront ainsi facilités.

Enfin, cette réduction de la taille de la cloche 17 et/ou de l'embase 16 permettra de réduire la longueur totale (le périmètre) de la jonction étanche 18, ce qui simplifiera l'emboîtement de la cloche 17 sur l'embase 16 et permettra une économie de matériau de collage 107.

On notera que l'extension tubulaire 127 peut être formée d'un seul tenant avec l'embase 16, le cas échéant par moulage, tel que cela est le cas au sein de la seconde variante (figure 19 et 20) et de la troisième variante (figures 21 et 22) du dispositif 1 de direction.

Alternativement, l'extension tubulaire 127 pourra être formée par une pièce distincte de la cloche 17 et de l'embase 16, rapportée et fixée sur la cloche 17 et/ou sur l'embase 16, tel que cela est le cas au sein de la quatrième variante illustrée sur les figures 23 à 26.

L'extension tubulaire 127 pourra notamment être formée à cet effet par un tronçon de tube métallique.

L'extension tubulaire 127 pourra ainsi former une troisième portion de coque de confinement 15, qui, en association avec l'embase 16 et la cloche 17 forme la portion rigide (la totalité de la portion rigide) de la coque de confinement 15, contrairement aux première, seconde et troisième variantes du dispositif 1 (figures 5 à 22) au sein desquelles deux pièces, en l'occurrence l'embase 16 et la cloche 17, suffisaient (à elles seules) à former la portion rigide de la coque de confinement 15.

Selon cette quatrième variante illustrée sur les figures 23 à 26, la cloche 17 et l'embase 16 pourront présenter, le long de l'axe longitudinal (YY'), des longueurs égales, qui pourront par exemple représenter entre 15 % et 35 %, et de préférence 20 % à 30 % de la longueur L3 de la crémaillère 3.

Que l'extension tubulaire 127 soit intégrée à l'embase 16 ou formée par une pièce distincte rapportée, ladite extension tubulaire 127 pourra avantageusement être pourvue de pattes de fixation 128, du genre canons, notamment au voisinage du second palier de guidage 120, qui permettront de fixer l'extension tubulaire 127 sur la structure réceptrice 2 du véhicule, ou bien encore de fixer d'autres organes du véhicule sur ladite extension tubulaire 127.

Le cas échéant, et en particulier lorsque l'extension tubulaire 127 est formée dans un matériau polymère et/ou lorsque ladite extension tubulaire 127 est venue de matière avec l'embase 16, les pattes de fixation 128 pourront avantageusement être formées d'un seul tenant avec ladite extension tubulaire 127, tel que cela est illustré sur les figures 19 à 22.

Par ailleurs, on notera que, de préférence, en plus du sous-ensemble actionneur 4, et le cas échéant en plus du sous-ensemble actionneur 4 et du palier de guidage satellite 120 (ou du sous-ensemble actionneur manuel 204), la coque de confinement 15, et plus particulièrement la portion rigide de la coque délimitée par l'embase 16 et la cloche 17, contient aussi, dans une même enceinte 20, le calculateur 9 qui gère le dispositif de direction.

En d'autres termes, la coque de confinement 15 permet avantageusement de protéger au moins, de façon groupée, d'une part le sous-ensemble actionneur 4 motorisé, c'est-à-dire incluant le moteur d'assistance 5 et la structure porteuse 10 correspondante, et d'autre part le calculateur 9 qui pilote ledit moteur d'assistance 5 (et plus globalement qui pilote le dispositif de direction assistée 1).

Selon une première possibilité d'agencement, qui correspond notamment aux figures 5, 6, 10, 11, 13 à 15, et 18 à 20, et donc aux première et seconde variantes de réalisation du dispositif 1, le calculateur 9 peut être logé sous la crémaillère 3, dans l'espace interstitiel compris entre la crémaillère 3 et la structure réceptrice (le berceau) 2, à l'opposé de l'arbre d'entrée 13 et du tablier 42 du véhicule par rapport à la crémaillère 3 (et par rapport à l'axe longitudinal (YY') de ladite crémaillère).

Un tel agencement permettra avantageusement de placer le calculateur 9 dans un volume relativement dégagé du compartiment moteur 43, et ainsi de gagner en compacité dans la partie supérieure du dispositif 1 de direction, et notamment au dos du moteur d'assistance 5, au niveau duquel la place disponible dans ledit compartiment moteur 43 est particulièrement restreinte.

A cet effet, le calculateur 9 sera de préférence logé intégralement dans l'embase 6, dans un emplacement pour calculateur 16P-9 marqué en creux dans l'empreinte 16P de ladite embase 16, tel que cela est notamment bien visible sur la figure 11.

Ledit emplacement pour calculateur 16P-9 est de préférence situé (et compris) longitudinalement, c'est-à-dire selon l'axe longitudinal (YY'), entre l'emplacement 16P-4 pour sous-ensemble actionneur 4 (situé ici à gauche de l'emplacement 16P-9 pour calculateur) d'une part, et l'emplacement 16P-3 pour crémaillère (gouttière) 16P-3, qui est situé ici à droite de l'emplacement pour calculateur 16P-9, ainsi que l'emplacement pour palier de guidage satellite 16P-120 (qui prolonge l'emplacement pour crémaillère 16P-3) d'autre part.

L'emplacement pour calculateur 16P-9 sera avantageusement plus profond (par rapport au plan de joint P0 sur lequel s'ouvre ledit emplacement pour calculateur 16P-9) que l'emplacement pour crémaillère 16P-3, de sorte à pouvoir loger le calculateur sous ladite crémaillère 3.

En outre, l'emplacement pour calculateur 16P-9 sera de préférence formé d'un seul tenant, par exemple par moulage, et préférentiellement en matériau polymère, avec les autres emplacements pour actionneur 16P-4, pour crémaillère 16P-3 et pour palier de guidage satellite 16P-120.

Selon une seconde possibilité d'agencement, qui est ici commune à la troisième variante de réalisation (figures 21, 22) et à la quatrième variante de réalisation (figures 23 à 26), le calculateur 9 pourra être logé dans l'enceinte 20 au dos du moteur d'assistance 5.

Un tel agencement pourra éventuellement simplifier le câblage du moteur d'assistance 5 et du calculateur 9, et permettre la réalisation d'une cloche 17 et d'une embase 16 plus compactes (plus courtes) selon l'axe longitudinal (YY') que la cloche 17 et l'embase 16 mises en oeuvre selon la première possibilité d'agencement avec calculateur 9 logé sous la crémaillère 3.

Selon cette seconde possibilité d'agencement, le calculateur 9 pourra être logé dans un emplacement pour calculateur 16P-9, 17P-9 qui se partage entre l'embase 16 et la cloche 17, tel que cela est visible sur les figures 21 à 26.

Selon une caractéristique préférentielle qui peut constituer une invention à part entière, et tel que cela est illustré notamment sur les figures 9, 15, 17 et 18, la structure porteuse 10 est pourvue d'organes de fixation 130, tels que des trous filetés (de préférence borgnes), destinés à permettre la fixation du dispositif 1 de direction assistée sur le véhicule V, à travers la coque de confinement 15.

De préférence, la coque de confinement 15, et plus préférentiellement l'embase 16, comprend alors, sur sa surface externe 15E, 16E, et tel qu'il a été dit plus haut en référence à l'interface d'arrimage 21, des surfaces de siège 23 destinées à venir au contact de points d'ancrage 25, du genre plots, appartenant à la structure réceptrice 2 du véhicule, lesdites surfaces de siège 23 étant percées d'orifices d'accès 29 qui traversent l'épaisseur de la coque de confinement 15 et débouchent dans l'enceinte 20, en vis-à-vis des organes de fixation 130 de la structure porteuse 10, de sorte à permettre la création d'un lien de fixation, typiquement par traction directe au moyen d'un élément de retenue 70 de type vis ou goujon, entre d'une part les points d'ancrage 25 de la structure réceptrice 2 du véhicule recevant le dispositif 1 de direction et d'autre part lesdits organes de fixation (trous filetés) 130 appartenant à la structure porteuse 10 logée dans la coque de confinement 15.

Avantageusement, un tel agencement permet aux éléments de retenue (goujons) 70 issus de la structure réceptrice (berceau) 2 de venir en prise directement dans la structure porteuse 10, de préférence métallique, qui forme l'ossature rigide du sous-ensemble actionneur 4, ce qui garantit un arrimage stable et robuste dudit sous-ensemble actionneur 4, et donc plus globalement du dispositif 1, au berceau 2.

De préférence, la structure porteuse 10 présentera, ici sur sa face inférieure, trois organes de fixation (trous filetés) 130, disposés en triangle, et recevant chacun un élément de retenue 70, de manière à assurer une fixation stable et solide en trois points.

En variante, un organe de fixation 130 pourra être un trou lisse destiné à recevoir un pion, de manière à permettre un centrage de la structure porteuse, tandis que les deux autres organes de fixation 130 permettront une fixation par serrage par vis.

Le ou les organes de fixation 130 pourront avantageusement être aménagés (et plus particulièrement percés) dans des pieds 131 faisant saillie sous la structure porteuse 10, lesdits pieds 131 étant à ce titre de préférence formés d'un seul tenant avec le premier carter de direction 81.

La hauteur de positionnement de la coque de confinement 15 par rapport aux points d'ancrage 25 (plots) pourra au besoin être ajustée par une ou des cales de réglage 27, tel que cela est illustré sur la figure 17.

Avantageusement, selon le choix des cales de réglages 27, on pourra modifier à volonté l'assiette de la coque 15 (c'est-à-dire l'inclinaison en tangage et en roulis de ladite coque 15), et plus globalement l'assiette du dispositif 1, et donc par exemple régler l'horizontalité de ladite coque 15, respectivement dudit dispositif 1.

Par ailleurs, on notera que, avantageusement, le fait de plaquer contre la structure réceptrice 2 la coque de confinement 15, et plus particulièrement les inserts 28 qui sont noyés dans l'épaisseur de l'embase 16 pour ménager et renforcer les orifices d'accès 29 permettant l'insertion des éléments de retenue (goujon) 70, permet d'assurer une bonne étanchéité au niveau de l'interface d'arrimage 21, en masquant *in fine* les orifices d'accès 29 une fois le dispositif 1 de direction en place sur la structure réceptrice (berceau) 2.

En particulier, on peut ainsi éviter l'intrusion d'eau liquide, de poussière ou de brouillard salin (ou d'autres corps étrangers, notamment liquides) dans les trous filetés 130.

On notera que l'invention permet avantageusement de conserver les organes de fixation (trous filetés) 130 dans la structure porteuse 10, c'est-à-dire dans le volume confiné et protégé de l'enceinte 20, et plus particulièrement dans le volume délimité par l'emboîtement de la cloche 17 sur l'embase 16 et ainsi contenu entre ladite cloche 17 et ladite embase 16, tout en autorisant malgré tout la création d'une liaison de fixation, réalisée au moyen des éléments de retenue 70 qui traversent la coque 15, entre ladite structure porteuse 10 et la structure réceptrice 2 qui est, elle, située dans le compartiment moteur 42 et qui est donc exposée à l'environnement 19, et notamment à l'eau, à la poussière et au brouillard salin.

Afin de renforcer encore l'étanchéité de l'interface d'arrimage 21, mais également pour assurer la fixation de la structure porteuse 10 à la coque 15, et plus particulièrement la fixation de la structure porteuse 10 à l'embase 16, on peut avantageusement, placer la structure porteuse 10 (et plus particulièrement les pieds 131 du premier carter de direction) au contact de l'insert 28 (le cas échéant, après avoir placé chaque pied 131 au contact de l'insert 28 qui lui correspond), de telle manière que l'organe de fixation (le trou fileté) 130 soit ainsi superposé à l'insert 28 en vis-à-vis de l'orifice d'accès 29, puis remplir avec un matériau de comblement 132, du genre résine, étanche et résistant à la corrosion, l'interstice qui est compris entre chaque pied 131 de la structure porteuse et la paroi (interne) de la coque 15, ici la paroi interne de l'embase 16, au fond de l'emplacement 16P-4 pour sous-ensemble actionneur, tel que cela est illustré sur la figure 17.

On pourra ainsi sceller par collage la structure porteuse 10 dans l'embase 16.

Egalement pour renforcer l'étanchéité, on pourra prévoir un joint torique 133, à la base du pied 131, pincé entre le pied 131 et l'insert 28, de préférence dans un épaulement creusé dans le pied 131, joint torique 133 qui se trouvera également noyé dans le matériau de comblement 132, tel que cela est illustré sur la figure 17.

De préférence, le système de fixation du palier de guidage satellite 120 (c'est-à-dire du second carter de direction 121) à la coque de confinement 15 et à la structure réceptrice 2 du véhicule sera analogue au système de fixation de la structure porteuse 10 décrit ci-dessus, les caractéristiques d'un système de fixation pouvant se déduire *mutatis mutandis* de celles de l'autre système de fixation.

Ainsi, de préférence, tel que cela est illustré sur les figures 3, 15 et 18, et par analogie avec la figure 17, le palier de guidage satellite 120, et plus particulièrement le second carter de direction 121, est pourvu d'organes de fixation 230, tels que des trous filetés, destinés à permettre la fixation du dispositif 1 de direction assistée sur le véhicule V, à travers ladite coque de confinement 15.

De préférence, la coque de confinement 15, et plus préférentiellement l'embase 16, comprend alors, sur sa surface externe 15E, 16E, des surfaces de siège 24 destinées à venir au contact de points d'ancrage 26, du genre plots, appartenant à la structure réceptrice 2 du véhicule, lesdites surfaces de siège 24 étant percées d'orifices d'accès 30 qui traversent l'épaisseur de la coque de confinement 15 et débouchent, dans l'enceinte 20, en vis-à-vis des organes de fixation 230 du palier de guidage satellite, de sorte à permettre la création d'un lien de fixation (par traction directe au moyen d'un élément de retenue 70 de type goujon) entre d'une part les points d'ancrage 26 de la structure réceptrice 2 du véhicule recevant le dispositif 1 de direction et d'autre part lesdits organes de fixation (trous filetés) 230 appartenant au palier de guidage satellite 120 logé dans la coque de confinement 15.

Ici encore, le second carter de direction 121 pourra comporter trois organes de fixation 230, répartis en triangle, et de préférence des trous filetés 230 borgnes percés dans des pieds 231 formant saillie sous, et formés d'un seul tenant avec, ledit second carter de direction 121.

Le scellement (combinant la fixation mécanique et la réalisation de l'étanchéité) du second carter de direction 121 dans la coque 15, et plus particulièrement dans l'embase 16, sur les insert 28, pourra également être réalisé par collage à l'aide d'un matériau de comblement 132, éventuellement complété par un joint torique 133, selon la configuration illustrée sur la figure 17 (sur laquelle il suffit de remplacer le premier carter de direction 81 de la structure porteuse 10 par le second carter de direction 121 du palier de guidage satellite 120, et d'adapter les références des surfaces de siège 23, 24, des points d'ancrage 25, 26, et des orifices d'accès 29, 30).

De même, on pourra utiliser des cales de réglage 27 pour former des entretoises entre les points d'ancrage 26 et les surfaces de siège 24 de la coque 15.

Avantageusement, le dispositif 1 de direction disposera ainsi de deux jeux d'organes de fixation 130, 230 autonomes permettant de fixer de façon stable et solide ledit dispositif 1 sur la structure réceptrice 2, au moyen d'une première fixation de la structure porteuse (principale) 10, et d'une seconde fixation du palier satellite 120, indépendante et distante de la première fixation.

On notera que les surfaces de siège 23, 24 pourront présenter toute forme adaptée, sensiblement conjuguée à la forme des points d'ancrage 25, 26.

De préférence, afin notamment de garantir la stabilité du dispositif 1 ainsi que la capacité de réglage de la demi-course de la crémaillère 3, telle qu'elle sera décrite ci-après, les surfaces de siège 23, 24 seront sensiblement planes, et de préférence parallèles à l'axe longitudinal (YY'), ainsi que, plus préférentiellement, parallèles au plan de joint P0.

Selon une caractéristique préférentielle qui peut constituer une invention à part entière, applicable à la fixation de la structure porteuse 10 et/ou le cas échéant à la fixation du palier de guidage satellite 120, et tel que cela est visible sur les figures 15 et 18, les orifices d'accès 29, 30 percés dans la coque de confinement 15 au niveau des surfaces de siège 23, 24 sont oblongs, selon la direction (YY') de translation de la crémaillère, de sorte à autoriser, lors du positionnement de la structure porteuse 10 (et plus particulièrement lors du positionnement du premier carter de direction 81) dans la coque de confinement 15, et plus particulièrement dans l'embase (ouverte) 16, et/ou, le cas échéant, lors du positionnement du palier de guidage satellite 120 (et plus particulièrement lors du positionnement du second carter de direction 121) dans ladite coque de confinement 15, et plus particulièrement dans l'embase (ouverte) 16, le réglage de la distance d'espacement D_{ref} qui sépare, au sein de ladite coque de confinement 15 (au sein de l'embase 16), la structure porteuse 10 du palier de guidage satellite 120, de sorte à permettre l'ajustement de la demi-course C3/2 de la crémaillère 3.

En effet, tel que cela est illustré sur la figure 18, les orifices d'accès 29, 30 oblongs, orientés sensiblement parallèlement à l'axe longitudinal (YY'), offrent une longueur d'ajustement L29, L30 selon laquelle on peut déplacer et ajuster la position longitudinale, le long de l'axe longitudinal (YY'), de la structure porteuse 10, respectivement du palier de guidage satellite 120, et plus particulièrement la position longitudinale des organes de fixation (trous filetés) 130, 230, par rapport à la coque 15, et plus particulièrement par rapport à l'embase 16, avant de sceller (et donc d'immobiliser définitivement) ladite structure porteuse 10, respectivement ledit palier de guidage satellite 120, dans ladite embase 16.

Or, la distance L10 entre d'une part les organes de fixation 130 de la structure porteuse 10 et d'autre part le bord du premier guide 87 qui forme butée (ici une butée gauche) à l'encontre du mouvement de translation T3 rentrant selon lequel l'extrémité gauche 3G de la crémaillère 3 tend à revenir vers l'intérieur de la coque 15, et, respectivement, la distance L120 entre d'une part les organes de fixation 230 du palier satellite 120 et d'autre part le bord du second guide 122 qui forme butée (ici butée droite) à l'encontre du mouvement de translation T3 rentrant selon lequel l'extrémité droite 3D de la crémaillère 3 tend à revenir vers l'intérieur de la coque 15 (et donc selon lequel l'extrémité gauche ressort de la coque 15), est connue, constante, et relativement bien maîtrisée.

En décalant longitudinalement la position des organes de fixation 130, 230 par rapport à la coque 15, on décale de même, par rapport à la coque 15, la position des butées longitudinales de la crémaillère 3 associées aux (premier, et respectivement second) guides 87, 122, et qui définissent la course C3 en translation de ladite crémaillère 13, au regard notamment de la longueur totale L3 de la crémaillère.

Par conséquent, on peut régler, de chaque côté (gauche et droit), la demi-course C3/2, c'est-à-dire l'amplitude de translation, selon laquelle la crémaillère peut se déplacer du côté concerné pour manoeuvrer les roues directrices.

A titre indicatif, on remarquera que, lors de la fabrication d'une embase 16 par moulage d'un matériau polymère, l'intervalle de tolérance typique sur l'entraxe qui sépare les orifices de passage 29, 30 est de l'ordre de +/- 2 mm, alors que la tolérance maximale acceptée sur la demi-course C3/2 de la crémaillère 3 est de l'ordre de +/- 0,5 mm.

La capacité de réglage longitudinal selon l'invention permet donc de rattraper les défauts dimensionnels de la coque 15 et de satisfaire à la précision exigée pour la translation T3 de la crémaillère 3.

En pratique, pour procéder au réglage, on pourra placer l'embase 16 (vide et ouverte) sur un gabarit qui possède des plots d'arrimage espacés précisément d'un entraxe prédéfini qui correspond à distance d'espacement D_{ref} souhaitée pour obtenir la course C3 visée.

Une fois l'embase 16 posée sur le gabarit, on fait en sorte que les orifices d'accès 29, 30 percés dans l'embase 16 coïncident sensiblement avec lesdits plots d'arrimage.

Ensuite, on rapporte le sous-ensemble actionneur 4 (et plus particulièrement le premier carter de direction 81 de la structure porteuse 10) dans l'empreinte 16P de l'embase 16 (ici dans la partie gauche de ladite empreinte 16P), en vis-à-vis des plots d'arrimage, et l'on fixe temporairement le sous-ensemble actionneur 4 au gabarit, dans la position convenable, à travers le fond de l'embase 16, par vissage des organes de fixation 130 (trous filetés) aux plots d'arrimage dudit gabarit.

On scelle ensuite le sous-ensemble actionneur 4 en position dans l'embase 16 en coulant et en polymérisant un matériau de comblement 132.

On procèdera de même pour rapporter, régler et fixer le palier de guidage satellite 120, dans la partie droite de l'embase 16.

Le cas échéant, on pourra d'abord monter (visser) le sous-ensemble actionneur 4 et le palier de guidage satellite 120 dans l'embase 16, avant de procéder au scellement groupé de ces deux éléments dans ladite embase 16.

Le sous-ensemble actionneur 4 et le palier de guidage satellite 120 adoptent ainsi automatiquement un espacement D_{ref} qui correspond à l'entraxe imposé par le gabarit, et conservent avantageusement et définitivement ledit espacement D_{ref} une fois qu'ils sont fixés dans l'embase 16 par le matériau de comblement 132.

On pourra alors achever l'assemblage du dispositif 1, notamment en enfilant la crémaillère 3 dans le premier et le second carter de direction 81, 121, puis refermer la coque en rapportant et en scellant par collage la cloche 17 sur l'embase 16.

Le dispositif 1 de direction achevé pourra alors être démonté (dévissé) du gabarit et stocké en attendant d'être rapporté et monté dans un véhicule.

Bien entendu, l'invention concerne également en tant que tel un véhicule V, notamment un véhicule automobile destiné au transport de personnes, qui est équipé d'un dispositif 1 de direction assistée selon l'une ou l'autre des variantes décrites dans ce qui précède.

Plus particulièrement, l'invention concerne un véhicule V comprenant un berceau 2 supportant les roues directrices (et notamment, le cas échéant, les organes de suspension desdites roues), berceau 2 sur lequel le dispositif de direction 1 est posé et fixé, par ses interfaces d'arrimage 22.

Ledit véhicule comprend de préférence également un tablier 42, séparant l'habitacle 44 du compartiment moteur 43, et contre lequel ledit dispositif de direction 1 vient également en appui, par son interface de commande 41.

L'invention concerne enfin un procédé d'assemblage d'un dispositif 1 selon l'une ou l'autre des variantes décrites dans ce qui précède, procédé au cours duquel on place l'embase 16 sur un gabarit (table de montage), on rapporte, on règle en position longitudinale et l'on fixe dans l'empreinte 16P de ladite embase 16 le sous-ensemble actionneur 4, ainsi que, le cas échéant, le palier de guidage satellite 120, puis l'on referme la coque de confinement 15 en rapportant, emboîtant et fixant (par collage) la cloche 17 par-dessus l'embase 16, de manière à former une sur-enveloppe de protection étanche autour de l'ossature mécanique (interne) du dispositif 1, tel que cela a été décrit dans ce qui précède.

Le report de la cloche 17 sur l'embase pourra avantageusement être réalisé en remplissant préalablement les rainures de collage 103, 104 de l'embase 16 d'une quantité prédéterminée de matériau de collage (colle polymère, de type résine) 107, puis en rapportant la cloche 17 sur l'embase, de manière à faire pénétrer les nervures d'accroche 105, 106 dans lesdites rainures de collage 103, 104, et donc dans le matériau de collage 107, et en poursuivant le mouvement d'enfoncement selon la direction d'approche DA jusqu'à ce que les crochets 111 des languettes d'encliquetage 110 viennent en prise contre l'épaulement 114, sur tout le pourtour du rebord périphérique 101 de l'embase 16. La fixation par emboîtement et encliquetage maintiendra ainsi avantageusement la cloche 17 en position sur l'embase 16 pendant la durée nécessaire au durcissement du matériau de collage 107.

On notera que, avantageusement, en réalisant l'essentiel de la coque 15 (à l'exception des éléments auxiliaires d'étanchéité qui assurent l'étanchéité au niveau des interfaces), et plus particulièrement en réalisant la portion rigide de la coque 15, au moyen d'un nombre très limité de pièces, en l'espèce préférentiellement au moyen de seulement deux pièces (l'embase 16, et la cloche 17), voire éventuellement au moyen de trois pièces (si l'on rapporte en plus une extension tubulaire 127), on fiabilise et on simplifie considérablement l'assemblage du dispositif 1, en réduisant le nombre d'opérations nécessaires, ainsi que le nombre de jonctions à étanchéifier (notamment du fait que les jonctions structurelles liées à la constitution et à la tenue mécanique de la structure porteuse 10 n'ont plus besoin d'être intrinsèquement étanches à l'eau et au brouillard salin, cette fonction d'étanchéité étant dévolue à la jonction étanche 18).

On appréciera plus globalement l'agencement modulaire du dispositif de direction 1, qui comprend d'une part des organes internes, capables en tant que tels d'assurer la manoeuvre (et notamment la manoeuvre motorisée) de la crémaillère, lesdits organes internes comprenant au moins un premier module formé par le sous-ensemble actionneur (motorisé) 4, et, de préférence, un second module distinct du premier module et formé par le palier de guidage satellite 120 (ou le cas échéant par un second sous-ensemble actionneur, manuel), lesdits organes internes pouvant également comprendre la crémaillère 3 dans son ensemble, ainsi que, le cas échéant, le calculateur 9, et d'autre part une coque de confinement 15, distincte desdits organes internes et formée par des organes externes (cloche 17, embase 16, extension tubulaire 127, et élément auxiliaires d'étanchéité), qui sépare les organes internes de l'environnement extérieur 19 du dispositif 1, en formant une enveloppe externe qui entoure et protège lesdits organes internes, de sorte à contenir lesdits organes internes dans une enceinte 20 étanche à l'eau, à la poussière, au brouillard salin, et aux autres corps étrangers, notamment liquides.

A ce titre, on notera en particulier que le sous-ensemble actionneur 4, et le cas échéant le palier de guidage satellite 120, c'est-à-dire le premier module et le second module susmentionnés, sont de préférence entièrement contenus à l'intérieur du volume hors-tout délimité par la portion rigide de la coque 5, et plus particulièrement à l'intérieur du volume délimité par la seule réunion de la cloche 17 et de l'embase 16 (sans dépasser dudit volume), et donc à l'intérieur du périmètre de la jonction étanche 18, si bien qu'ils se trouvent protégés aussi bien des agressions mécaniques (chocs, projection de gravier, etc.) que des agressions chimiques (eau, brouillard salin...).

## Revendications

1. Dispositif (1) de direction assistée destiné à être installé sur une structure réceptrice (2) appartenant à un véhicule, telle qu'un berceau portant un train roulant dudit véhicule, ledit dispositif comprenant une crémaillère de direction (3), ainsi qu'au moins un sous-ensemble, dit « sous-ensemble actionneur » (4), qui est destiné à manoeuvrer ladite crémaillère (3) et qui comprend à cet effet au moins un moteur d'assistance (5), un organe d'entraînement (6), du genre pignon d'entraînement, agencé pour être entraîné par le moteur d'assistance (5) et pour venir en prise sur la crémaillère (3) afin de pouvoir entraîner cette dernière en déplacement, ainsi qu'une structure porteuse (10) qui porte le moteur d'assistance (5) et qui est agencée pour soutenir et guider l'organe d'entraînement (6) et la crémaillère (3) l'un par rapport à l'autre, ledit dispositif de direction assistée étant **caractérisé en ce qu'**il comprend également une coque de confinement (15), qui est distincte du sous-ensemble actionneur (4), et qui est formée par la réunion d'au moins une première portion de coque, dite « embase » (16), et d'une seconde portion de coque, dite « cloche » (17), qui sont rapportées l'une sur l'autre et fixées l'une à l'autre par une jonction étanche (18) de manière à entourer le sous-ensemble actionneur (4) d'une enveloppe protectrice qui isole ledit sous-ensemble actionneur de l'environnement extérieur (19) du dispositif de direction (1), de telle sorte que ladite coque de confinement (15) empêche ledit sous-ensemble actionneur (4) d'être exposé aux projections d'eau et au brouillard salin, lorsque le dispositif de direction assistée (1) est en place sur la structure réceptrice (2) du véhicule.

2. Dispositif de direction selon la revendication 1 **caractérisé en ce que** le sous-ensemble actionneur (4) comprend un arbre d'entrée (13), destiné à être accouplé à une colonne de direction (12) portant un volant de conduite (11), et qui s'étend selon un axe directeur (XX'), un arbre de sortie (71) sur lequel est monté, en tant qu'organe d'entraînement (6), un pignon d'entraînement destiné à engrener sur une portion dentée de la crémaillère (3), un réducteur (14) à engrenage qui permet au moteur d'assistance (5) de venir en prise sur l'arbre de sortie (71), ainsi que, de préférence, un capteur de couple conducteur (72) destiné à mesurer le couple dit « couple conducteur » exercé par le conducteur sur le volant de conduite (11) et la colonne de direction (12), et **en ce que** la structure porteuse (10) comprend une pluralité de carters (81, 82, 83), de préférence métalliques, initialement distincts, qui sont accolés et fixés les uns aux autres selon un empilement qui suit sensiblement l'axe directeur (XX'), carters parmi lesquels on trouve un carter de direction (81), qui accueille et guide le pignon d'entraînement (6) et la crémaillère (3), un carter de réducteur (82), superposé axialement au carter de direction (81), qui porte le moteur d'assistance (5) et dans lequel est logé le réducteur (14) à engrenage, puis, de préférence, un carter de capteur (83), superposé axialement au carter de réducteur (82), et qui accueille le capteur de couple conducteur (72).

3. Dispositif selon la revendication 2 **caractérisé en ce que** l'empilement de carters (81, 82, 83) de la structure porteuse (10) est réalisé sans interposer, entre les différents carters (81, 82, 83) adjacents qui forment ledit empilement, de joints d'étanchéité rapportés, et notamment sans interposer de joints en élastomère entre carters (81, 82, 83) adjacents appartenant audit empilement.

4. Dispositif selon la revendication 2 ou 3 **caractérisé en ce que** le carter de direction (81), le carter de réducteur (82) et le carter de capteur de couple (83) sont maintenus les uns aux autres au moyen d'au moins une vis d'assemblage (89), et de préférence d'une pluralité de vis d'assemblage (89), ladite vis d'assemblage, ou chacune desdites vis d'assemblage, étant commune aux trois carters (81, 82, 83) empilés, et agissant comme un tirant qui tire mutuellement le carter de capteur de couple (83) et le carter de direction (81) l'un vers l'autre, en serrant ainsi le carter de réducteur (82) entre ledit carter de capteur et ledit carter de direction.

5. Dispositif selon l'une des revendications précédentes **caractérisé en ce que** la cloche (17) présente un rebord périphérique (102) qui épouse, selon un plan de joint (P0) de la coque de confinement (15), et en suivant le tracé de la jonction étanche (18), un rebord périphérique (101) correspondant de l'embase (16), **en ce que** ledit rebord périphérique (102) de la cloche (17) est pourvu d'au moins une nervure d'accroche (105, 106) qui s'étend le long dudit rebord périphérique (102) de la cloche, selon le tracé de la jonction étanche (18), et qui fait saillie vers l'embase (16) par rapport au plan de joint (P0), et **en ce que** le rebord périphérique (101) de l'embase (16) est pourvu d'au moins une rainure de collage (103, 104) qui est agencée en creux par rapport au plan de joint (P0) de manière à recevoir d'une part la nervure d'accroche (105, 106) et d'autre part un matériau de collage (107), tel qu'une résine polymérisable, qui assure la fixation étanche, par collage, de la nervure d'accroche (105, 106) dans la rainure de collage (103, 104), de sorte à former par collage une jonction étanche (18) entre la cloche (17) et l'embase (16).

6. Dispositif selon la revendication 5 **caractérisé en ce que** le volume résiduel de la, ou respectivement des rainures de collage (103, 104), qui subsiste à l'intérieur desdites rainures de collage (103, 104) lorsque la, respectivement les, nervures d'accroche (105, 106) ont pénétré dans lesdites rainures de collage et se trouvent en place dans ces dernières, est supérieur au volume du matériau de collage (107) introduit dans cette, respectivement ces mêmes rainures de collage (103, 104) pour réaliser la jonction entre la cloche (17) et l'embase (16), de telle sorte que les parois latérales qui bordent lesdites rainures de collage (103, 104) forment des parois anti-débordement (108, 109) capables de contenir ledit matériau de collage (107) à l'intérieur de ladite, respectivement desdites rainures de collage (103, 104) lors de la mise en place de la cloche (17) sur l'embase (16).

7. Dispositif selon l'une des revendications précédentes **caractérisé en ce que** le rebord périphérique (102) de la cloche (17) et/ou le rebord périphérique (101) de l'embase (16) comprend au moins une, et de préférence plusieurs languettes d'encliquetage (110), conçues pour venir en prise sur l'embase (16), et/ou respectivement sur la cloche (17), lorsque l'on referme la cloche (17) sur l'embase (16), de manière à maintenir la cloche plaquée contre l'embase.

8. Dispositif selon la revendication 7 et l'une des revendications 5 ou 6 **caractérisé en ce que** la ou les languettes d'encliquetage (110) sont formées d'un seul tenant avec la cloche (17), et prolongent le rebord périphérique (102) de ladite cloche (17) en débord externe des nervures d'accroche (105, 106), lesdites languettes d'encliquetage (110) étant pourvues, de préférence sensiblement à leur extrémité, d'un crochet (111) agencé pour venir en prise contre le rebord périphérique (101) de l'embase (16), en débord externe des rainures de collage (103, 104).

9. Dispositif selon l'une des revendications précédentes **caractérisé en ce que** le sous-ensemble actionneur (4) comprend un arbre d'entrée (13) qui est destiné à être accouplé à une colonne de direction (12) portant un volant de conduite (11), et qui s'étend selon un axe directeur (XX'), et **en ce que** le plan de joint (P0) de la coque de confinement (15), selon lequel la cloche (17) épouse l'embase (16), est sécant audit axe directeur (XX').

10. Dispositif selon l'une des revendications précédentes **caractérisé en ce que** la cloche (17), et de préférence aussi bien la cloche (17) que l'embase (16), est réalisée en matière plastique.

11. Dispositif selon l'une des revendications précédentes **caractérisé en ce qu'**il comprend un palier de guidage satellite (120), distinct de la structure porteuse (10), ledit palier de guidage satellite (120) étant disposé à l'intérieur de la coque de confinement (15), à distance de la structure porteuse (10), et agencé pour guider la crémaillère (3) en translation (T3) par rapport à ladite coque de confinement (15).

12. Dispositif selon la revendication 11 **caractérisé en ce que** le palier de guidage satellite (120) est pourvu d'organes de fixation (230), tels que des trous filetés, destinés à permettre la fixation du dispositif (1) de direction assistée sur le véhicule (V), à travers ladite coque de confinement (15), et **en ce que** la coque de confinement (15), de préférence l'embase (16), comprend, sur sa surface externe (15E, 16E), des surfaces de siège (24) destinées à venir au contact de points d'ancrage (26) appartenant à la structure réceptrice (2) du véhicule, lesdites surfaces de siège (24) étant percées d'orifices d'accès (29, 30) qui traversent l'épaisseur de la coque de confinement (15) et débouchent en vis-à-vis des organes de fixation (230) du palier de guidage satellite (120), de sorte à permettre la création d'un lien de fixation entre d'une part les points d'ancrage (26) de la structure réceptrice (2) du véhicule recevant le dispositif de direction et d'autre part lesdits organes de fixation (230) appartenant au palier de guidage satellite (120) logé dans la coque de confinement (15).

13. Dispositif selon l'une des revendications précédentes **caractérisé en ce que** la structure porteuse (10) est pourvue d'organes de fixation (130), tels que des trous filetés, destinés à permettre la fixation du dispositif (1) de direction assistée sur le véhicule (V), à travers la coque de confinement (15), et **en ce que** la coque de confinement (15), de préférence l'embase (16), comprend, sur sa surface externe (15E, 16E), des surfaces de siège (23) destinées à venir au contact de points d'ancrage (25) appartenant à la structure réceptrice (2) du véhicule, lesdites surfaces de siège (23) étant percées d'orifices d'accès (29) qui traversent l'épaisseur de la coque de confinement (15) et débouchent en vis-à-vis des organes de fixation (130) de la structure porteuse (10), de sorte à permettre la création d'un lien de fixation entre d'une part les points d'ancrage (25) de la structure réceptrice (2) du véhicule recevant le dispositif (1) de direction et d'autre part lesdits organes de fixation (130) appartenant à la structure porteuse (10) logée dans la coque de confinement (15).

14. Dispositif selon la revendication 11 ou 12 et la revendication 13 **caractérisé en ce que** les orifices d'accès (29, 30) percés dans la coque de confinement (15) au niveau des surfaces de siège (23, 24) sont oblongs, selon la direction (YY') de translation de la crémaillère (3), de sorte à autoriser, lors du positionnement de la structure porteuse (10) dans la coque de confinement (15) et/ou, le cas échéant, lors du positionnement du palier de guidage satellite (120) dans ladite coque de confinement (15), le réglage de la distance d'espacement (D_{ref}) qui sépare, au sein de ladite coque de confinement (15), la structure porteuse (10) du palier de guidage satellite (120), de sorte à permettre l'ajustement de la demi-course (C3/2) de la crémaillère (3).

15. Dispositif selon l'une des revendications précédentes **caractérisé en ce que** la cloche (17) présente, d'un seul tenant avec la portion de ladite cloche qui recouvre la structure porteuse (10), une portion (45) d'accouplement au tablier qui est agencée pour venir en appui contre le tablier (42) du véhicule.

## Patentansprüche

1. Servolenkvorrichtung (1), die dazu bestimmt ist, auf eine Aufnahmestruktur (2), die einem Fahrzeug angehört, wie einem Traggestell, das ein Achsaggregat des Fahrzeugs trägt, installiert zu werden, wobei die Vorrichtung eine Lenkzahnstange (3) umfasst, sowie mindestens eine "Steller-Unterbaugruppe" (4) genannte Unterbraugruppe, die dazu bestimmt ist, die Zahnstange (3) zu manövrieren, und die zu diesem Zweck mindestens einen Unterstützungsmotor (5), ein Antriebsorgan (6), in der Art eines Antriebsritzels, angeordnet, um durch den Unterstützungsmotor (5) angetrieben zu werden, und um in Eingriff auf der Zahnstange (3) zu kommen, um diese Letztere in Verschiebung anzutreiben, sowie eine Trägerstruktur (10), die den Unterstützungsmotor (5) trägt und die angeordnet ist, um das Antriebsorgan (6) und die Zahnstange (3) in Bezug zueinander zu stützen und zu führen, umfasst, wobei die Servolenkvorrichtung **dadurch gekennzeichnet ist, dass** sie ebenfalls eine Einschlussverschalung (15) umfasst, die sich von der Steller-Unterbaugruppe (4) unterscheidet, und die durch die Vereinigung mindestens eines ersten Verschalungsabschnitts, genannt "Grundplatte" (16), und eines zweiten Verschalungsabschnitts, genannt "Glocke" (17), gebildet wird, die aneinander angebracht werden und durch eine dichte Verbindung (18) aneinander befestigt werden, um die Steller-Unterbaugruppe (4) mit einer Schutzhülle zu umgeben, die die Steller-Unterbaugruppe von der äußeren Umgebung (19) der Lenkvorrichtung (1) isoliert, sodass die Einschlussverschalung (15) verhindert, dass die Steller-Unterbaugruppe (4) Wasser- und Salznebelspritzern ausgesetzt wird, wenn die Servolenkvorrichtung (1) auf der Aufnahmestruktur (2) des Fahrzeugs platziert ist.

2. Lenkvorrichtung nach Anspruch 1, **dadurch gekennzeichnet, dass** die Steller-Unterbaugruppe (4) eine Eingangswelle (13), die dazu bestimmt ist, mit einer Lenksäule (12) gekoppelt zu werden, die ein Fahrlenkrad (11) trägt, und die sich entlang einer Lenkachse (XX') erstreckt, eine Ausgangswelle (71), auf der als Antriebsorgan (6) ein Antriebsritzel montiert ist, das dazu bestimmt ist, in einen verzahnten Abschnitt der Zahnstange (3) einzugreifen, ein Eingriffsgetriebe (14), das es dem Unterstützungsmotor (5) ermöglicht, in Eingriff auf die Ausgangswelle (71) zu kommen, sowie, vorzugsweise einen Lenkermomentsensor (72), dazu bestimmt, das "Lenkermoment" genannte Moment zu messen, das vom Lenker auf das Fahrlenkrad (11) und die Lenksäule (12) ausgeübt wird, umfasst, und dadurch, dass die Trägerstruktur (10) eine Vielzahl von, vorzugsweise metallischen, ursprünglich unterschiedlichen Gehäusen (81, 82, 83) umfasst, die entsprechend einer Stapelung, die im Wesentlichen der Lenkachse (XX') folgt, aneinander angebunden und befestigt sind, Gehäusen, unter denen man ein Lenkgehäuse (81) findet, die das Antriebsritzel (6) und die Zahnstange (3) aufnimmt und führt, ein Getriebegehäuse (82), axial auf dem Lenkgehäuse (81) überlagert, die den Unterstützungsmotor (5) trägt, und in dem das Eingriffsgetriebe (14) untergebracht ist, danach, bevorzugt, ein Sensorgehäuse (83), axial auf dem Getriebegehäuse (82) überlagert, und die den Lenkermomentsensor (72) aufnimmt.

3. Vorrichtung nach Anspruch 2, **dadurch gekennzeichnet, dass** die Stapelung an Gehäusen (81, 82, 83) der Trägerstruktur (10) realisiert wird, ohne zwischen den verschiedenen angrenzenden Gehäusen (81, 82, 83), die die Stapelung bilden, beigebrachte Dichtungen einzusetzen, und insbesondere, ohne Elastomer-Dichtungen zwischen angrenzenden Gehäusen (81, 82, 83), die derselben Stapelung angehören, einzusetzen.

4. Vorrichtung nach Anspruch 2 oder 3, **dadurch gekennzeichnet, dass** das Lenkgehäuse (81), das Getriebegehäuse (82) und das Momentsensorgehäuse (83) anhand mindestens einer Montageschraube (89), und vorzugsweise einer Vielzahl von Montageschrauben (89) aneinandergehalten werden, wobei die Montageschraube oder jede der Montageschrauben den drei gestapelten Gehäusen (81, 82, 83) gemein ist, und wie eine Zugstange wirkt, die das Momentsensorgehäuse (83) und das Lenkgehäuse (81) gegenseitig zueinander zieht, und somit das Getriebegehäuse (82) zwischen dem Sensorgehäuse und dem Lenkgehäuse einklemmt.

5. Vorrichtung nach einem der vorstehenden Ansprüche, **dadurch gekennzeichnet, dass** die Glocke (17) einen umlaufenden Rand (102) aufweist, der sich entlang einer Trennebene (P0) der Einschlussverschalung (15) und durch Folgen des Verlaufs der dichten Verbindung (18) an einen umlaufenden Rand (101) anlegt, der der Grundplatte (16) entspricht, dadurch, dass der umlaufende Rand (102) der Glocke (17) mit mindestens einer Einhakrippe (105, 106) versehen ist, die sich entlang des umlaufenden Randes (102) der Glocke, entsprechend dem Verlauf der dichten Verbindung (18), erstreckt, und die in Bezug auf die Trennebene (P0) zur Grundplatte (16) übersteht, und dadurch, dass der umlaufende Rand (101) der Grundplatte (16) mit mindestens einer Klebenut (103, 104) versehen ist, die in Bezug auf die Trennebene (P0) in Hohlform angeordnet ist, um einerseits die Einhakrippe (105, 106), und andererseits ein Klebematerial (107), wie ein polymerisierbares Harz, zu empfangen, das für eine dichte Befestigung der Einhakrippe (105, 106) durch Verkleben in der Klebenut (103, 104) sorgt, um durch Verkleben eine dichte Verbindung (18) zwischen der Glocke (17) und der Grundplatte (16) zu bilden.

6. Vorrichtung nach Anspruch 5, **dadurch gekennzeichnet, dass** das restliche Volumen von der, oder beziehungsweise den Klebenuten (103, 104), das im Inneren der Klebenuten (103, 104) verbleibt, wenn die Einhakrippe(n) (105, 106) in die Klebenuten eingedrungen sind, und sich in diesen Letzteren an Ort und Stelle befinden, größer ist, als das Volumen des Klebematerials (107), das in diese selbe(n) Klebenut(en) (103, 104) eingeführt worden ist, um die Verbindung zwischen der Glocke (17) und der Grundplatte (16) zu realisieren, sodass die Seitenwände, die an die Klebenuten (103, 104) angrenzen, Überlaufschutzwände (108, 109) bilden, die imstande sind, das Klebematerial (107) beim Anbringen der Glocke (17) auf der Grundplatte (16) im Inneren der Klebenut(en) (103, 104) zurückzuhalten.

7. Vorrichtung nach einem der vorstehenden Ansprüche, **dadurch gekennzeichnet, dass** der umlaufende Rand (102) der Glocke (17) und/oder der umlaufende Rand (101) der Grundplatte (16) mindestens eine, und vorzugsweise mehrere Einrastlaschen (110) umfasst, die gestaltet sind, um in Eingriff auf die Grundplatte (16) und/oder beziehungsweise auf die Glocke (17) zu kommen, wenn man die Glocke (17) auf der Grundplatte (16) schließt, um die Glocke auf der Grundplatte angedrückt zu halten.

8. Vorrichtung nach Anspruch 7, und einem der Ansprüche 5 oder 6, **dadurch gekennzeichnet, dass** die Einrastlasche(n) (110) aus einem Stück mit der Glocke (17) gebildet sind, und den umlaufenden Rand (102) der Glocke (17) in einem externen Überstand der Einhakrippen (105, 106) verlängern, wobei die Einrastlaschen (110), vorzugsweise im Wesentlichen an ihrem Ende mit einem Haken (111) versehen sind, der angeordnet ist, um in Eingriff an den umlaufenden Rand (101) der Grundplatte (16) in einem externen Überstand der Klebenuten (103, 104) zu kommen.

9. Vorrichtung nach einem der vorstehenden Ansprüche, **dadurch gekennzeichnet, dass** die Steller-Unterbaugruppe (4) eine Eingangswelle (13) umfasst, die dazu bestimmt ist, an eine Lenksäule (12) gekoppelt zu werden, die ein Fahrlenkrad (11) trägt, und die sich entlang einer Achse (XX') erstreckt, und dadurch, dass die Trennebene (P0) der Einschlussverschalung (15), entlang der sich die Glocke (17) an der Grundplatte (16) anlegt, die Lenkachse (XX') schneidet.

10. Vorrichtung nach einem der vorstehenden Ansprüche, **dadurch gekennzeichnet, dass** die Glocke (17), und vorzugsweise sowohl die Glocke (17), als auch die Grundplatte (16) aus Kunststoffmaterial realisiert sind.

11. Vorrichtung nach einem der vorstehenden Ansprüche, **dadurch gekennzeichnet, dass** sie ein Satellitenführungslager (120) umfasst, das sich von der Trägerstruktur (10) unterscheidet, wobei das Satellitenführungslager (120) im Inneren der Einschlussverschalung (15), auf Abstand zur Trägerstruktur (10) angeordnet ist, und angeordnet ist, um die Zahnstange (3) in Bezug auf die Einschlussverschalung (15) translatorisch (T3) zu führen.

12. Vorrichtung nach Anspruch 11, **dadurch gekennzeichnet, dass** das Satellitenführungslager (120) mit Befestigungsorganen (230), wie Gewindebohrungen, versehen ist, die dazu bestimmt sind, die Befestigung der Servolenkvorrichtung (1) an dem Fahrzeug (V) durch die Einschlussverschalung (15) hindurch zu ermöglichen, und dadurch, dass die Einschlussverschalung (15), vorzugsweise die Grundplatte (16) auf ihrer externen Oberfläche (15E, 16E) Sitzoberflächen (24) umfasst, die dazu bestimmt sind, in Kontakt mit den Verankerungspunkten (26) zu kommen, die der Aufnahmestruktur (2) des Fahrzeugs angehören, wobei die Sitzoberflächen (24) mit Zugangsöffnungen (29, 30) aufgebohrt sind, die durch die Stärke der Einschlussverschalung (15) hindurchführen und gegenüber den Befestigungsorganen (230) des Satellitenführungslagers (120) einmünden, um die Schaffung einer Befestigungsverbindung zwischen einerseits den Verankerungspunkten (26) der Aufnahmestruktur (2) des Fahrzeugs, das die Lenkvorrichtung empfängt, und andererseits den Befestigungsorganen (230) zu ermöglichen, die dem Satellitenführungslager (120) angehören, das in der Einschlussverschalung (15) aufgenommen ist.

13. Vorrichtung nach einem der vorstehenden Ansprüche, **dadurch gekennzeichnet, dass** die Trägerstruktur (10) mit Befestigungsorganen (130), wie Gewindebohrungen, versehen ist, die dazu bestimmt sind, die Befestigung der Servolenkvorrichtung (1) an dem Fahrzeug (V) durch die Einschlussverschalung (15) hindurch zu ermöglichen, und dadurch, dass die Einschlussverschalung (15), vorzugsweise die Grundplatte (16), an ihrer externen Oberfläche (15E, 16E) Sitzoberflächen (23) umfasst, die dazu bestimmt sind, in Kontakt mit den Verankerungspunkten (25) zu kommen, die der Aufnahmestruktur (2) des Fahrzeugs angehören, wobei die Sitzoberflächen (23) mit Zugangsöffnungen (29) aufgebohrt sind, die durch die Stärke der Einschlussverschalung (15) hindurchführen und gegenüber den Befestigungsorganen (130) der Trägerstruktur (10) einmünden, um die Schaffung einer Befestigungsverbindung zwischen einerseits den Verankerungspunkten (25) der Aufnahmestruktur (2) des Fahrzeugs, das die Lenkvorrichtung (1) empfängt, und andererseits den Befestigungsorganen (130) zu ermöglichen, die der Trägerstruktur (10) angehören, das in der Einschlussverschalung (15) aufgenommen ist.

14. Vorrichtung nach Anspruch 11 oder 12, und Anspruch 13, **dadurch gekennzeichnet, dass** die im Bereich der Sitzoberflächen (23, 24) in die Einschlussverschalung (15) gebohrten Zugangsöffnungen (29, 30) in der Translationsrichtung (YY') der Zahnstange (3) länglich sind, um beim Positionieren der Trägerstruktur (10) in der Einschlussverschalung (15) und/oder gegebenenfalls beim Positionieren des Satellitenführungslagers (120) in der Einschlussverschalung (15) die Einstellung der Beabstandungsdistanz (D_{ref}) zu erlauben, die innerhalb der Einschlussverschalung (15) die Trägerstruktur (10) von dem Satellitenführungslager (120) trennt, um die Anpassung des Halbweges (C3/2) der Zahnstange (3) zu ermöglichen.

15. Vorrichtung nach einem der vorstehenden Ansprüche, **dadurch gekennzeichnet, dass** die Glocke (17), in einem Stück mit dem Abschnitt der Glocke, die die Trägerstruktur (10) abdeckt, einen Kopplungsabschnitt (45) an die Stirnwand aufweist, der angeordnet ist, um sich an die Stirnwand (42) des Fahrzeugs anzulegen.

## Claims

1. A power steering device (1) intended to be installed on a receiving structure (2) belonging to a vehicle, such as a cradle carrying a running gear of said vehicle, said device comprising a steering rack (3), as well as at least one subassembly, called « actuator subassembly » (4), which is intended to maneuver said rack (3) and which comprises to this end at least one assist motor (5), a drive member (6), such as a drive pinion, arranged to be driven by the assist motor (5) and to engage the rack (3) in order to be able to drive the latter in displacement, as well as a carrier structure (10) which carries the assist motor (5) and which is arranged to support and guide the drive member (6) and the rack (3) relative to each other, said power steering device being **characterized in that** it also comprises a containment shell (15), which is distinct from the actuator subassembly (4), and which is formed by the combination of at least one first shell portion, called « base » (16), and of a second shell portion, called « bell-housing » (17), which are attached and fastened to each other by a sealed junction (18) so as to surround the actuator subassembly (4) with a protective envelope which isolates said actuator subassembly from the external environment (19) of the steering device (1), so that said containment shell (15) prevents said actuator subassembly (4) from being exposed to water projections and to salt spray, when the power steering device (1) is in place on the receiving structure (2) of the vehicle.

2. The steering device according to claim 1, **characterized in that** the actuator subassembly (4) comprises an input shaft (13), intended to be coupled to a steering column (12) carrying a steering wheel (11), and which extends according to a guiding axis (XX'), an output shaft (71) on which is mounted, as a drive member (6), a drive pinion intended to mesh on a toothed portion of the rack (3), a gear reducer (14) which enables the assist motor (5) to engage the output shaft (71), as well as, preferably, a driver torque sensor (72) intended to measure the torque called « driver torque » exerted by the driver on the steering wheel (11) and the steering column (12), and **in that** the carrier structure (10) comprises a plurality of preferably metallic, initially distinct casings (81, 82, 83) which are contiguous and fastened to each other according to a stack which substantially follows the guiding axis (XX'), casings among which there is a steering casing (81), which accommodates and guides the drive pinion (6) and the rack (3), a reducer casing (82), axially superimposed with the steering casing (81), which carries the assist motor (5) and in which is housed the gear reducer (14), then, preferably, a sensor casing (83), axially superimposed with the reducer casing (82), and which accommodates the driver torque sensor (72).

3. The device according to claim 2, **characterized in that** the stack of casings (81, 82, 83) of the carrier structure (10) is made without interposing, between the different adjacent casings (81, 82, 83) which form said stack, attached sealing rings, and in particular without interposing seals made of elastomer between adjacent casings (81, 82, 83) belonging to said stack.

4. The device according to claim 2 or 3, **characterized in that** the steering casing (81), the reducer casing (82) and the torque sensor casing (83) are held together by means of at least one assembly screw (89) and, preferably, a plurality of assembly screws (89), said assembly screw, or each of said assembly screws, being common to the three stacked casings (81, 82, 83), and acting as a tie member which pulls mutually the torque sensor casing (83) and the steering casing (81) toward each other, thus clasping the reducer casing (82) between said sensor casing and said steering casing.

5. The device according to any of the preceding claims, **characterized in that** the bell-housing (17) has a peripheral rim (102) which conforms, according to a parting plane (P0) of the containment shell (15), and following the course of the sealed junction (18), to a corresponding peripheral rim (101) of the base (16), **in that** said peripheral rim (102) of the bell-housing (17) is provided with at least one hooking rib (105, 106) which extends along said peripheral rim (102) of the bell-housing, according to the course of the sealed junction (18), and which protrudes toward the base (16) with respect to the parting plane (P0), and **in that** the peripheral rim (101) of the base (16) is provided with at least one bonding groove (103, 104) which is arranged hollowed with respect to the parting plane (P0) so as to receive, on the one hand, the hooking rib (105, 106) and, on the other hand, a bonding material (107), such as a polymerizable resin, which ensures the sealed fastening, by bonding, of the hooking rib (105, 106) in the bonding groove (103, 104), so as to form by bonding a sealed junction (18) between the bell-housing (17) and the base (16).

6. The device according to claim 5, **characterized in that** the residual volume of the bonding groove(s) (103, 104), which subsists inside said bonding grooves (103, 104) when the hooking rib(s) (105, 106) have penetrated into said bonding grooves and are in place in the latter, is larger than the volume of the bonding material (107) introduced into this/these same bonding groove(s) (103, 104), in order to make the junction between the bell-housing (17) and the base (16), so that the lateral walls which border said bonding grooves (103, 104) form anti-overflow walls (108, 109) capable of containing said bonding material (107) inside said bonding groove(s) (103, 104) during the set-up of the bell-housing (17) on the base (16).

7. The device according to any of the preceding claims, **characterized in that** the peripheral rim (102) of the bell-housing (17) and/or the peripheral rim (101) of the base (16) comprises at least one, and preferably several, snap-fit tab(s) (110), designed to engage the base (16), and/or respectively the bell-housing (17), when the bell-housing (17) is closed on the base (16), so as to hold the bell-housing (17) pressed against the base (16).

8. The device according to claim 7 and any of claims 5 or 6, **characterized in that** the snap-fit tab(s) (110) are formed integrally with the bell-housing (17), and extend the peripheral rim (102) of said bell-housing (17) overhanging outwardly of the hooking ribs (105, 106), said snap-fit tabs (110) being provided, preferably substantially at their end, with a hook (111) arranged to engage against the peripheral rim (101) of the base (16), overhanging outwardly of the bonding grooves (103, 104).

9. The device according to any of the preceding claims, **characterized in that** the actuator subassembly (4) comprises an input shaft (13) which is intended to be coupled to a steering column (12) carrying a steering wheel (11), and which extends according to a guiding axis (XX'), and **in that** the parting plane (P0) of the containment shell (15), according to which the bell-housing (17) conforms to the base (16), is secant to said guiding axis (XX').

10. The device according to any of the preceding claims, **characterized in that** the bell-housing (17), and preferably both the bell-housing (17) and the base (16), is/are made of plastic material.

11. The device according to any of the preceding claims, **characterized in that** it comprises a planet guide bearing (120), distinct from the carrier structure (10), said planet guide bearing (120) being disposed inside the containment shell (15), away from the carrier structure (10), and arranged to guide the rack (3) in translation (T3) relative to said containment shell (15).

12. The device according to claim 11, **characterized in that** the planet guide bearing (120) is provided with fastening members (230), such as threaded holes, intended to enable the fastening of the power steering device (1) on the vehicle (V), through said containment shell (15), and **in that** the containment shell (15), preferably the base (16), comprises, on its outer surface (15E, 16E), seat surfaces (24) intended to come into contact with anchorage points (26) belonging to the receiving structure (2) of the vehicle, said seat surfaces (24) being pierced with access orifices (29, 30) which pass across the thickness of the containment shell (15) and open opposite the fastening members (230) of the planet guide bearing (120), so as to enable the creation of a fastening link between, on the one hand, the anchorage points (26) of the receiving structure (2) of the vehicle receiving the steering device and, on the other hand, said fastening members (230) belonging to the planet guide bearing (120) housed in the containment shell (15).

13. The device according to any of the preceding claims, **characterized in that** the carrier structure (10) is provided with fastening members (130), such as threaded holes, intended to enable the fastening of the power steering device (1) on the vehicle (V), through the containment shell (15), and **in that** the containment shell (15), preferably the base (16), comprises, on its outer surface (15E, 16E), seat surfaces (23) intended to come into contact with anchorage points (25) belonging to the receiving structure (2) of the vehicle, said seat surfaces (23) being pierced with access orifices (29) which pass across the thickness of the containment shell (15) and open opposite the fastening members (130) of the carrier structure (10), so as to enable the creation of a fastening link between, on the one hand, the anchorage points (25) of the receiving structure (2) of the vehicle receiving the steering device (1) and, on the other hand, said fastening members (130) belonging to the carrier structure (10) housed in the containment shell (15).

14. The device according to claim 11 or 12 and claim 13, **characterized in that** the access orifices (29, 30) pierced in the containment shell (15) at the seat surfaces (23, 24) are oblong, according to the direction (YY') of translation of the rack (3), so as to enable, during the positioning of the carrier structure (10) in the containment shell (15) and/or, where appropriate, during the positioning of the planet guide bearing (120) in said containment shell (15), the setting of the spacing distance (D_{ref}) which separates, within said containment shell (15), the carrier structure (10) from the planet guide bearing (120), so as to enable the adjustment of the half-stroke (C3/2) of the rack (3).

15. The device according to any of the preceding claims, **characterized in that** the bell-housing (17) has, integrally with the portion of said bell-housing which covers the carrier structure (10), a coupling portion (45) to the bulkhead which is arranged to bear against the bulkhead (42) of the vehicle.
